(19) Europäisches Patentamt
European Patent Office
Office européen des brevets

(11) EP 3 182 830 B1

(12) **EUROPEAN PATENT SPECIFICATION**

(45) Date of publication and mention of the grant of the patent:
**31.10.2018 Bulletin 2018/44**

(21) Application number: **15753020.5**

(22) Date of filing: **18.08.2015**

(51) Int Cl.:
***A21D 8/04*** *(2006.01)* ***A21D 13/40*** *(2017.01)*
***A21D 10/00*** *(2006.01)*

(86) International application number:
**PCT/EP2015/068931**

(87) International publication number:
**WO 2016/026850 (25.02.2016 Gazette 2016/08)**

(54) **USE OF GH5 XYLANASE AND GH8, GH10 OR GH11 XYLANASE IN DOUGH, DOUGH AND BAKING COMPOSITION COMPRISING THESE XYLANASE**

VERWENDUNG VON GH5-XYLANASE UND GH8-, GH10- ODER GH11-XYLANASE IN TEIG, TEIG- UND BACKZUSAMMENSETZUNG DAMIT

UTILISATION DE XYLANASE GH5 ET DE GH8, GH10 OU GH11 XYLANASE DANS UNE PÂTE, PÂTE ET COMPOSITION DE BOULANGERIE COMPRENANT CES ENZYMES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.08.2014 EP 14181583**

(43) Date of publication of application:
**28.06.2017 Bulletin 2017/26**

(73) Proprietor: **Novozymes A/S**
**2880 Bagsvaerd (DK)**

(72) Inventors:
- **KROGH, Kristian Bertel Roemer M.**
  **DK-2880 Bagsvaerd (DK)**
- **ENGELSEN, Merete Moeller**
  **DK-2000 Frederiksberg (DK)**
- **BECKER, Fiona**
  **DK-2830 Virum (DK)**

(74) Representative: **NZ EPO Representatives**
**Krogshoejvej 36**
**2880 Bagsvaerd (DK)**

(56) References cited:
**WO-A1-95/23515 WO-A1-96/32472**
**WO-A1-2004/023879 WO-A1-2011/070101**
**GB-A- 2 392 160**

- **COLLINS, GERDAY, FELLER: "Xylanases, xyalanase families and extremophilic xylanases", FEMS MICROBIOLOGY REVIEWS, vol. 29, 21 July 2004 (2004-07-21), XP002736529,**
- **HANCOCK S M ET AL: "Engineering of glycosidases and glycosyltransferases", CURRENT OPINION IN CHEMICAL BIOLOGY, CURRENT BIOLOGY LTD, LONDON, GB, vol. 10, no. 5, 1 October 2006 (2006-10-01), pages 509-519, XP028014503, ISSN: 1367-5931, DOI: 10.1016/J.CBPA.2006.07.015 [retrieved on 2006-10-01]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 182 830 B1

## Description

### Reference to a Sequence Listing

This application contains a Sequence Listing in computer readable form, which is incorporated herein by reference.

### Field of the Invention

The present invention relates to the use of a GH5 xylanase and a GH11 xylanase in a dough-based product.

### Description of the Related Art

Xylans are hemicelluloses found in all land plants (Popper and Tuohy, Plant Physiology, 2010, 153:373-383).
The known enzymes responsible for the hydrolysis of the xylan backbone are classified into enzyme families based on sequence similarity (www.cazy.org). The enzymes with mainly endo-xylanase activity have been described in Glycoside hydrolase family (GH) 5, 8, 10, 11 and 30.
COLLINS, GERDAY, FELLER, FEMS MICROBIOLOGY REVIEWS, vol. 29, 21 July 2004, discloses the glycoside hydrolase families 5,7,8,10,11 and 43. The enzymes within a family share some characteristics such as 3D fold, and they usually share the same reaction mechanism. Some GH families have narrow or mono-specific substrate specificities while other families have broad substrate specificities.
The relationship between sequences within GH5 has been clarified by defining subfamilies of related sequences (Aspeborg et al. BMC Evolutionary Biology, 2012, 12:186). Two of the subfamilies of GH5, GH5_21 and GH5_34, have been described as xylanases acting on arabinoxylan.
WO 2011/070101 A1, WO 95/23515 A1, GB 2 392 160 A, WO 2004/023879 A1, WO 96/32472 A1 disclose the use of xylanase in dough-based products.

### Summary of the Invention

The present inventors have found that by adding to a dough a GH5 xylanase and a GH11 xylanase, the dough is less sticky, so we claim: A method for preparing a dough-based product, comprising adding a GH5 xylanase and GH11 xylanase, to a dough.
In one embodiment, the GH5 xylanase has at least 70% identity to SEQ ID NO: 1.
In one embodiment, the dough-based product is a bread.
In one embodiment, the dough comprises wheat and/or corn.
In one embodiment, additionally one or more enzymes selected from the group consisting of an amylase, an anti-staling amylase, a lipase, a galactolipase, a phospholipase, a protease, a transglutaminase, a cellulase, a hemicellulase, an acyltransferase, a protein disulfide isomerase, a pectinase, a pectate lyase, an oxidoreductase, a peroxidase, a laccase, a glucose oxidase, a pyranose oxidase, a hexose oxidase, a lipoxygenase, an L-amino acid oxidase, a carbohydrate oxidase, a sulfurhydryl oxidase, and a glucoamylase is added to the dough.
In one embodiment, dough prepared by adding a GH5 xylanase and a GH11 xylanase, to dough ingredients, is claimed.
In one embodiment, a baking composition comprising a GH5 xylanase and a GH11 xylanase is claimed.
In one embodiment, the baking composition is a dough, a flour composition, or a flour pre-mix.
In one embodiment, the baking composition according to the invention is in the form of a granulate or an agglomerated powder or a liquid.
In one embodiment, the use of the baking composition according to the invention for preparing dough, is claimed.
In one embodiment, the dough according to the invention is less sticky compared to dough wherein a GH5 xylanase has not been added.
In one embodiment, the GH5 xylanase is a GH5_21 or a GH5_34 xylanase.

### Definitions

**Xylanase:** The term "xylanase" means a 1,4-beta-D-xylan-xylohydrolase (E.C. 3.2.1.8) that catalyzes the endohydrolysis of 1,4-beta-D-xylosidic linkages in xylans. Xylanase activity can be determined with 0.2% AZCL-arabinoxylan as substrate in 0.01% TRITON® X-100 and 200 mM sodium phosphate pH 6 at 37°C. One unit of xylanase activity is defined as 1.0 μmole of azurine produced per minute at 37°C, pH 6 from 0.2% AZCL-arabinoxylan as substrate in 200 mM sodium phosphate pH 6.

**cDNA:** The term "cDNA" means a DNA molecule that can be prepared by reverse transcription from a mature, spliced, mRNA molecule obtained from a eukaryotic or prokaryotic cell. cDNA lacks intron sequences that may be present in the corresponding genomic DNA. The initial, primary RNA transcript is a precursor to mRNA that is processed through a series of steps, including splicing, before appearing as mature spliced mRNA.

**Coding sequence:** The term "coding sequence" means a polynucleotide, which directly specifies the amino acid sequence of a variant. The boundaries of the coding sequence are generally determined by an open reading frame, which begins with a start codon such as ATG, GTG or TTG and ends with a stop codon such as TAA, TAG, or TGA. The coding sequence may be a genomic DNA, cDNA, synthetic DNA, or a combination thereof.

**Control sequences:** The term "control sequences" means nucleic acid sequences necessary for expression of a polynucleotide encoding a variant of the present invention. Each control sequence may be native (*i.e.,* from the same gene) or foreign (*i.e.,* from a different gene) to the polynucleotide encoding the variant or native or foreign to each other. Such control sequences include, but are not limited to, a leader, polyadenylation sequence, propeptide sequence, promoter, signal peptide sequence, and transcription terminator. At a minimum, the control sequences include a promoter, and transcriptional and translational stop signals. The control sequences may be provided with linkers for the purpose of introducing specific restriction sites facilitating ligation of the control sequences with the coding region of the polynucleotide encoding a variant.

**Expression:** The term "expression" includes any step involved in the production of a variant including, but not limited to, transcription, post-transcriptional modification, translation, post-translational modification, and secretion.

**Expression vector:** The term "expression vector" means a linear or circular DNA molecule that comprises a polynucleotide encoding a variant and is operably linked to control sequences that provide for its expression.

**Fragment:** The term "fragment" means a polypeptide having one or more (e.g., several) amino acids absent from the amino and/or carboxyl terminus of a mature polypeptide or domain, wherein the fragment has xylanase activity.

**Host cell:** The term "host cell" means any cell type that is susceptible to transformation, transfection, transduction, or the like with a nucleic acid construct or expression vector comprising a polynucleotide of the present invention. The term "host cell" encompasses any progeny of a parent cell that is not identical to the parent cell due to mutations that occur during replication.

**Isolated:** The term "isolated" means a substance in a form or environment which does not occur in nature. Non-limiting examples of isolated substances include (1) any non-naturally occurring substance, (2) any substance including, but not limited to, any enzyme, variant, nucleic acid, protein, peptide or cofactor, that is at least partially removed from one or more or all of the naturally occurring constituents with which it is associated in nature; (3) any substance modified by the hand of man relative to that substance found in nature; or (4) any substance modified by increasing the amount of the substance relative to other components with which it is naturally associated (e.g., multiple copies of a gene encoding the substance; use of a stronger promoter than the promoter naturally associated with the gene encoding the substance). An isolated substance may be present in a fermentation broth sample.

**Mature polypeptide:** The term "mature polypeptide" means a polypeptide in its final form following translation and any post-translational modifications, such as N-terminal processing, C-terminal truncation, glycosylation, phosphorylation, etc. In one aspect, the mature polypeptide is SEQ ID NO: 1. C-terminal and/or N-terminal amino acid) expressed by the same polynucleotide.

**Mature polypeptide coding sequence:** The term "mature polypeptide coding sequence" means a polynucleotide that encodes a mature polypeptide having xylanase activity.

**Mutant:** The term "mutant" means a polynucleotide encoding a variant.

**Nucleic acid construct:** The term "nucleic acid construct" means a nucleic acid molecule, either single- or double-stranded, which is isolated from a naturally occurring gene or is modified to contain segments of nucleic acids in a manner that would not otherwise exist in nature or which is synthetic, which comprises one or more control sequences.

**Operably linked:** The term "operably linked" means a configuration, in which a control sequence is placed at an appropriate position relative to the coding sequence of a polynucleotide in such a way that the control sequence directs expression of the coding sequence.

**Parent:** The term "parent" means a xylanase to which an alteration is made to produce the xylanase variants of the present invention. The parent may be a naturally occurring (wild-type) polypeptide or a variant or fragment thereof.

**Sequence identity:** The relatedness between two amino acid sequences or between two nucleotide sequences is described by the parameter "sequence identity".

For purposes of the present invention, the sequence identity between two amino acid sequences is determined using the Needleman-Wunsch algorithm (Needleman and Wunsch, 1970, J. Mol. Biol. 48: 443-453) as implemented in the Needle program of the EMBOSS package (EMBOSS: The European Molecular Biology Open Software Suite, Rice et al., 2000, Trends Genet. 16: 276-277), preferably version 5.0.0 or later. The parameters used are gap open penalty of 10, gap extension penalty of 0.5, and the EBLOSUM62 (EMBOSS version of BLOSUM62) substitution matrix. The output of Needle labeled "longest identity" (obtained using the -nobrief option) is used as the percent identity and is calculated as follows:

(Identical Residues x 100)/(Length of Alignment – Total Number of Gaps in Alignment)

For purposes of the present invention, the sequence identity between two deoxyribonucleotide sequences is determined using the Needleman-Wunsch algorithm (Needleman and Wunsch, 1970, *supra*) as implemented in the Needle program of the EMBOSS package (EMBOSS: The European Molecular Biology Open Software Suite, Rice et al., 2000, *supra*), preferably version 5.0.0 or later. The parameters used are gap open penalty of 10, gap extension penalty of 0.5, and the EDNAFULL (EMBOSS version of NCBI NUC4.4) substitution matrix. The output of Needle labeled "longest identity" (obtained using the -nobrief option) is used as the percent identity and is calculated as follows:

(Identical Deoxyribonucleotides x 100)/(Length of Alignment – Total Number of Gaps in Alignment).

**Variant:** The term "variant" means a polypeptide having xylanase activity comprising an alteration, *i.e.,* a substitution, insertion, and/or deletion, at one or more (*e.g.*, several) positions. A substitution means replacement of the amino acid occupying a position with a different amino acid; a deletion means removal of the amino acid occupying a position; and an insertion means adding one or more amino acids adjacent to and immediately following the amino acid occupying a position.

**Improved property:** When incorporated into a dough in effective amounts, the xylanase according to the invention, one or more properties of the dough or of the baked product obtained therefrom may be improved relative to a dough or a baked product in which the xylanase is not incorporated. The term "improved property" is defined herein as any property of a dough and/or a product obtained from the dough, particularly a baked product, which is improved by the action of the xylanase according to the invention or by the baking composition according to the invention relative to a dough or product in which the xylanase or composition according to the invention is not incorporated. The improved property may include, but is not limited to, increased strength of the dough, increased elasticity of the dough, increased stability, reduced stickiness of the dough, improved extensibility of the dough, improved machine ability of the dough, increased volume of the baked product, improved flavor of the baked product, improved crumb structure of the baked product, improved crumb softness of the baked product, and/or improved anti-staling of the baked product.

The improved property may be determined by comparison of a dough and/or a baked product prepared with and without addition of the xylanase or the baking composition of the present invention in accordance with the methods of present invention which are described below. Organoleptic qualities may be evaluated using procedures well established in the baking industry, and may include, for example, the use of a panel of trained taste-testers.

**Increased strength:** The term "increased strength of the dough" is defined herein as the property of a dough that has generally more elastic properties and/or requires more work input to mould and shape.

**Increased elasticity:** The term "increased elasticity of the dough" is defined herein as the property of a dough which has a higher tendency to regain its original shape after being subjected to a certain physical strain.

**Increased stability of the dough:** The term "increased stability of the dough" is defined herein as the property of a dough that is less susceptible to mechanical abuse thus better maintaining its shape and volume and is evaluated by the ratio of height: width of a cross section of a loaf after normal and/or extended proof.

**Reduced stickiness of the dough:** The term "reduced stickiness of the dough" is defined herein as the property of a dough that has less tendency to adhere to surfaces, e.g., in the dough production machinery, and is either evaluated empirically by the skilled test baker or measured by the use of a texture analyzer (e.g. TAXT2) as known in the art.

**Improved extensibility:** The term "improved extensibility of the dough" is defined herein as the property of a dough that can be subjected to increased strain or stretching without rupture.

**Improved machine ability:** The term "improved machine ability of the dough" is defined herein as the property of a dough that is generally less sticky and/or more firm and/or more elastic.

**Increased volume of the baked product:** The term "increased volume of the baked product" is measured as the volume of a given loaf of bread. The volume may be determined by the rape seed displacement method, or it may be determined as described in the examples.

**Improved crumb structure of the baked product:** The term "improved crumb structure of the baked product" is defined herein as the property of a baked product with finer cells and/or thinner cell walls in the crumb and/or more uniform/homogenous distribution of cells in the crumb and is usually evaluated visually by the baker or by digital image analysis as known in the art (e. g., C-cell, Calibre Control International Ltd, Appleton, Warrington, UK).

**Improved softness of the baked product:** The term "improved softness of the baked product" is the opposite of "firmness" and is defined herein as the property of a baked product that is more easily compressed and is evaluated either empirically by the skilled test baker or measured by the use of a texture analyzer (e.g. TAXT2 or TA-XT Plus from Stable Micro Systems Ltd, surrey, UK) as known in the art.

## DETAILED DESCRIPTION OF THE INVENTION

### Polypeptides having xylanase activity

A GH5 xylanase is described, in particular a GH5_21 or a GH5_34 xylanase.

An isolated polypeptide having a sequence identity to the polypeptide of SEQ ID NO: 1 of at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100%, which has xylanase activity, is described.

In one aspect, the polypeptide differs by no more than 20 amino acids, e.g., 1, 2, 3, 4, 5, 6, 7, 8, 9, 10, 11, 12, 13, 14, 15, 16, 17, 18, 19 or 20 from the polypeptide of SEQ ID NO: 1.

The polypeptide preferably comprises or consists of the amino acid sequence of SEQ ID NO: 1 or an allelic variant thereof; or is a fragment thereof having xylanase activity. In another aspect, the polypeptide comprises or consists of the polypeptide of SEQ ID NO: 1.

An isolated polypeptide having xylanase activity encoded by a polynucleotide that hybridizes under low stringency conditions, medium stringency conditions, medium-high stringency conditions, or high stringency conditions with the mature polypeptide coding sequence of SEQ ID NO: 1, or the full-length complement thereof (Sambrook et al., 1989, Molecular Cloning, A Laboratory Manual, 2d edition, Cold Spring Harbor, New York), is described.

The polynucleotide of SEQ ID NO: 2 or a subsequence thereof or a fragment thereof may be used to design nucleic acid probes to identify and clone DNA encoding polypeptides having xylanase activity from strains of different genera or species according to methods well known in the art. In particular, such probes can be used for hybridization with the genomic DNA or cDNA of a cell of interest, following standard Southern blotting procedures, in order to identify and isolate the corresponding gene therein. Such probes can be considerably shorter than the entire sequence, but should be at least 15, *e.g.*, at least 25, at least 35, or at least 70 nucleotides in length. Preferably, the nucleic acid probe is at least 100 nucleotides in length, e.g., at least 200 nucleotides, at least 300 nucleotides, at least 400 nucleotides, at least 500 nucleotides, at least 600 nucleotides, at least 700 nucleotides, at least 800 nucleotides, or at least 900 nucleotides in length. Both DNA and RNA probes can be used. The probes are typically labeled for detecting the corresponding gene (for example, with $^{32}P$, $^{3}H$, $^{35}S$, biotin, or avidin). Such probes are encompassed by the present invention.

A genomic DNA or cDNA library prepared from such other strains may be screened for DNA that hybridizes with the probes described above and encodes a polypeptide having xylanase activity. Genomic or other DNA from such other strains may be separated by agarose or polyacrylamide gel electrophoresis, or other separation techniques. DNA from the libraries or the separated DNA may be transferred to and immobilized on nitrocellulose or other suitable carrier material. In order to identify a clone or DNA that hybridizes with SEQ ID NO: 2 or a subsequence thereof, the carrier material is used in a Southern blot.

Hybridization indicates that the polynucleotide hybridizes to a labeled nucleic acid probe corresponding to SEQ ID NO: 2 under low to high stringency conditions. Molecules to which the nucleic acid probe hybridizes under these conditions can be detected using, for example, X-ray film or any other detection means known in the art.

Variants of the mature polypeptide of SEQ ID NO: 1 comprising a substitution, deletion, and/or insertion at one or more (*e.g.*, several) positions, are described. For example, the number of amino acid substitutions, deletions and/or insertions introduced into the mature polypeptide of SEQ ID NO: 1 is not more than 20, *e.g.*, 1, 2, 3, 4, 5, 6, 7, 8, 9, 10, 11, 12, 13, 14, 15, 16, 17, 18, 19 or 20. The amino acid changes may be of a minor nature, that is conservative amino acid substitutions or insertions that do not significantly affect the folding and/or activity of the protein; small deletions, typically of 1-30 amino acids; small amino- or carboxyl-terminal extensions, such as an amino-terminal methionine residue; a small linker peptide of up to 20-25 residues; or a small extension that facilitates purification by changing net charge or another function, such as a poly-histidine tract, an antigenic epitope or a binding domain.

Examples of conservative substitutions are within the groups of basic amino acids (arginine, lysine and histidine), acidic amino acids (glutamic acid and aspartic acid), polar amino acids (glutamine and asparagine), hydrophobic amino acids (leucine, isoleucine and valine), aromatic amino acids (phenylalanine, tryptophan and tyrosine), and small amino acids (glycine, alanine, serine, threonine and methionine). Amino acid substitutions that do not generally alter specific activity are known in the art and are described, for example, by H. Neurath and R.L. Hill, 1979, In, The Proteins, Academic Press, New York. Common substitutions are Ala/Ser, Val/Ile, Asp/Glu, Thr/Ser, Ala/Gly, Ala/Thr, Ser/Asn, Ala/Val, Ser/Gly, Tyr/Phe, Ala/Pro, Lys/Arg, Asp/Asn, Leu/Ile, Leu/Val, Ala/Glu, and Asp/Gly.

Alternatively, the amino acid changes are of such a nature that the physico-chemical properties of the polypeptides are altered. For example, amino acid changes may improve the thermal stability of the polypeptide, alter the substrate specificity, change the pH optimum, and the like.

Essential amino acids in a polypeptide can be identified according to procedures known in the art, such as site-directed mutagenesis or alanine-scanning mutagenesis (Cunningham and Wells, 1989, Science 244: 1081-1085). In the latter technique, single alanine mutations are introduced at every residue in the molecule, and the resultant mutant molecules are tested for xylanase activity to identify amino acid residues that are critical to the activity of the molecule. See also, Hilton et al., 1996, J. Biol. Chem. 271: 4699-4708. The active site of the enzyme or other biological interaction can also be determined by physical analysis of structure, as determined by such techniques as nuclear magnetic resonance, crystallography, electron diffraction, or photoaffinity labeling, in conjunction with mutation of putative contact site amino acids. See, for example, de Vos et al., 1992, Science 255: 306-312; Smith et al., 1992, J. Mol. Biol. 224: 899-904; Wlodaver et al., 1992, FEBS Lett. 309: 59-64. The identity of essential amino acids can also be inferred from an alignment with a related polypeptide.

Single or multiple amino acid substitutions, deletions, and/or insertions can be made and tested using known methods of mutagenesis, recombination, and/or shuffling, followed by a relevant screening procedure, such as those disclosed by Reidhaar-Olson and Sauer, 1988, Science 241: 53-57; Bowie and Sauer, 1989, Proc. Natl. Acad. Sci. USA 86: 2152-2156; WO 95/17413; or WO 95/22625. Other methods that can be used include error-prone PCR, phage display (*e.g.*, Lowman et al., 1991, Biochemistry 30: 10832-10837; U.S. Patent No. 5,223,409; WO 92/06204), and region-directed mutagenesis (Derbyshire et al., 1986, Gene 46: 145; Ner et al., 1988, DNA 7: 127).

Mutagenesis/shuffling methods can be combined with high-throughput, automated screening methods to detect activity of cloned, mutagenized polypeptides expressed by host cells (Ness et al., 1999, Nature Biotechnology 17: 893-896). Mutagenized DNA molecules that encode active polypeptides can be recovered from the host cells and rapidly sequenced using standard methods in the art. These methods allow the rapid determination of the importance of individual amino acid residues in a polypeptide.

The polypeptide may be a hybrid polypeptide in which a region of one polypeptide is fused at the N-terminus or the C-terminus of a region of another polypeptide.

The polypeptide may be a fusion polypeptide or cleavable fusion polypeptide in which another polypeptide is fused at the N-terminus or the C-terminus of the polypeptide of the present invention. A fusion polypeptide is produced by fusing a polynucleotide encoding another polypeptide to a polynucleotide of the present invention. Techniques for producing fusion polypeptides are known in the art, and include ligating the coding sequences encoding the polypeptides so that they are in frame and that expression of the fusion polypeptide is under control of the same promoter(s) and terminator. Fusion polypeptides may also be constructed using intein technology in which fusion polypeptides are created post-translationally (Cooper et al., 1993, EMBO J. 12: 2575-2583; Dawson et al., 1994, Science 266: 776-779).

A fusion polypeptide can further comprise a cleavage site between the two polypeptides. Upon secretion of the fusion protein, the site is cleaved releasing the two polypeptides. Examples of cleavage sites include, but are not limited to, the sites disclosed in Martin et al., 2003, J. Ind. Microbiol. Biotechnol. 3: 568-576; Svetina et al., 2000, J. Biotechnol. 76: 245-251; Rasmussen-Wilson et al., 1997, Appl. Environ. Microbiol. 63: 3488-3493; Ward et al., 1995, Biotechnology 13: 498-503; and Contreras et al., 1991, Biotechnology 9: 378-381; Eaton et al., 1986, Biochemistry 25: 505-512; Collins-Racie et al., 1995, Biotechnology 13: 982-987; Carter et al., 1989, Proteins: Structure, Function, and Genetics 6: 240-248; and Stevens, 2003, Drug Discovery World 4: 35-48.

**Sources of Polypeptides Having Xylanase Activity**

The polypeptide having xylanase activity may be obtained from microorganisms of any genus. The term "obtained from" as used herein in connection with a given source shall mean that the polypeptide encoded by a polynucleotide is produced by the source or by a strain in which the polynucleotide from the source has been inserted. In one aspect, the polypeptide obtained from a given source is secreted extracellularly.

The polypeptide may be a bacterial polypeptide. For example, the polypeptide may be a Gram-positive bacterial polypeptide such as a *Bacillus, Clostridium, Enterococcus, Geobacillus, Lactobacillus, Lactococcus, Oceanobacillus, Staphylococcus, Streptococcus, Saccharothrix, Doctylosporangium,* or *Streptomyces* polypeptide having xylanase activity, or a Gram-negative bacterial polypeptide such as a *Campylobacter, E. coli, Flavobacterium, Fusobacterium, Helicobacter, Ilyobacter, Neisseria, Pseudomonas, Salmonella,* or *Ureaplasma* polypeptide.

In one aspect, the polypeptide is a xylanase from a bacterium of the class *Actinobacteria,* such as from the order *Actinomycetales,* or from the suborder *Micromonosporineae,* or from the family *Micromonosporaceae,* or from the genera *Dactylosporangium.* In another aspect, the polypeptide is a *Dactylosporangium variesporum* polypeptide.

Strains of these species are readily accessible to the public in a number of culture collections, such as the American Type Culture Collection (ATCC), Deutsche Sammlung von Mikroorganismen und Zellkulturen GmbH (DSMZ), Centraalbureau Voor Schimmelcultures (CBS), and Agricultural Research Service Patent Culture Collection, Northern Regional Research Center (NRRL). The strain used is publically available under the accession number ATCC 31203 or DSM 43911.

The polypeptide may be identified and obtained from other sources including microorganisms isolated from nature (*e.g.*, soil, composts, water, etc.) or DNA samples obtained directly from natural materials (*e.g.*, soil, composts, water, etc.) using the above-mentioned probes. Techniques for isolating microorganisms and DNA directly from natural habitats are well known in the art. A polynucleotide encoding the polypeptide may then be obtained by similarly screening a genomic DNA or cDNA library of another microorganism or mixed DNA sample. Once a polynucleotide encoding a polypeptide has been detected with the probe(s), the polynucleotide can be isolated or cloned by utilizing techniques that are known to those of ordinary skill in the art.

**Polynucleotides**

Isolated polynucleotides encoding the polypeptide, as described herein, are described.

The techniques used to isolate or clone a polynucleotide are known in the art and include isolation from genomic DNA or cDNA, or a combination thereof. The cloning of the polynucleotides from genomic DNA can be effected, *e.g.,* by using the well known polymerase chain reaction (PCR) or antibody screening of expression libraries to detect cloned DNA fragments with shared structural features. See, *e.g.,* Innis et al., 1990, PCR: A Guide to Methods and Application, Academic Press, New York. Other nucleic acid amplification procedures such as ligase chain reaction (LCR), ligation activated transcription (LAT) and polynucleotide-based amplification (NASBA) may be used. The polynucleotides may be cloned from a strain of *Dactylosporangium,* or a related organism and thus, for example, may be an allelic or species variant of the polypeptide encoding region of the polynucleotide.

Modification of a polynucleotide encoding a polypeptide of the present invention may be necessary for synthesizing polypeptides substantially similar to the polypeptide. The term "substantially similar" to the polypeptide refers to non-naturally occurring forms of the polypeptide. These polypeptides may differ in some engineered way from the polypeptide isolated from its native source, *e.g.,* variants that differ in specific activity, thermostability, pH optimum, or the like. The variants may be constructed on the basis of the polynucleotide presented as the mature polypeptide coding sequence of SEQ ID NO: 2, *e.g.,* a subsequence thereof, and/or by introduction of nucleotide substitutions that do not result in a change in the amino acid sequence of the polypeptide, but which correspond to the codon usage of the host organism intended for production of the enzyme, or by introduction of nucleotide substitutions that may give rise to a different amino acid sequence. For a general description of nucleotide substitution, see, *e.g.,* Ford et al., 1991, Protein Expression and Purification 2: 95-107.

**Nucleic Acid Constructs**

Nucleic acid constructs are described comprising the polynucleotide operably linked to one or more control sequences that direct the expression of the coding sequence in a suitable host cell under conditions compatible with the control sequences.

A polynucleotide may be manipulated in a variety of ways to provide for expression of the polypeptide. Manipulation of the polynucleotide prior to its insertion into a vector may be desirable or necessary depending on the expression vector. The techniques for modifying polynucleotides utilizing recombinant DNA methods are well known in the art.

The control sequence may be a promoter, a polynucleotide that is recognized by a host cell for expression of a polynucleotide encoding a polypeptide of the present invention. The promoter contains transcriptional control sequences that mediate the expression of the polypeptide. The promoter may be any polynucleotide that shows transcriptional activity in the host cell including mutant, truncated, and hybrid promoters, and may be obtained from genes encoding extracellular or intracellular polypeptides either homologous or heterologous to the host cell.

Examples of suitable promoters for directing transcription of the nucleic acid constructs of the present invention in a bacterial host cell are the promoters obtained from the *Bacillus amyloliquefaciens* alpha-amylase gene (*amy*Q), *Bacillus licheniformis* alpha-amylase gene (*amyL*), *Bacillus licheniformis* penicillinase gene (*penP*)*, Bacillus stearothermophilus* maltogenic amylase gene (*amyM*), *Bacillus subtilis* levansucrase gene (*sacB*), *Bacillus subtilis xylA* and *xylB* genes, *Bacillus thuringiensis cryIIIA* gene (Agaisse and Lereclus, 1994, Molecular Microbiology 13: 97-107), *E. coli lac* operon, *E. coli trc* promoter (Egon et al., 1988, Gene 69: 301-315), *Streptomyces coelicolor* agarase gene (*dagA*)*,* and prokaryotic beta-lactamase gene (Villa-Kamaroff et al., 1978, Proc. Natl. Acad. Sci. USA 75: 3727-3731), as well as the *tac* promoter (DeBoer et al., 1983, Proc. Natl. Acad. Sci. USA 80: 21-25). Further promoters are described in "Useful proteins from recombinant bacteria" in Gilbert et al., 1980, Scientific American 242: 74-94. Examples of tandem promoters are disclosed in WO 99/43835.

Examples of suitable promoters for directing transcription of the nucleic acid constructs of the present invention in a filamentous fungal host cell are promoters obtained from the genes for *Aspergillus nidulans* acetamidase, *Aspergillus niger* neutral alpha-amylase, *Aspergillus niger* acid stable alpha-amylase, *Aspergillus niger* or *Aspergillus awamori* glucoamylase (*glaA*)*, Aspergillus oryzae* TAKA amylase, *Aspergillus oryzae* alkaline protease, *Aspergillus oryzae* triose phosphate isomerase, *Fusarium oxysporum* trypsin-like protease (WO 96/00787), *Fusarium venenatum* amyloglucosidase (WO 00/56900), *Fusarium venenatum* Daria (WO 00/56900), *Fusarium venenatum* Quinn (WO 00/56900), *Rhizo-*

*mucor miehei* lipase, *Rhizomucor miehei* aspartic proteinase, *Trichoderma reesei* beta-glucosidase, *Trichoderma reesei* cellobiohydrolase I, *Trichoderma reesei* cellobiohydrolase II, *Trichoderma reesei* endoglucanase I, *Trichoderma reesei* endoglucanase II, *Trichoderma reesei* endoglucanase III, *Trichoderma reesei* endoglucanase IV, *Trichoderma reesei* endoglucanase V, *Trichoderma reesei* xylanase I, *Trichoderma reesei* xylanase II, *Trichoderma reesei* beta-xylosidase, as well as the NA2-tpi promoter (a modified promoter from an *Aspergillus* neutral alpha-amylase gene in which the untranslated leader has been replaced by an untranslated leader from an *Aspergillus* triose phosphate isomerase gene; non-limiting examples include modified promoters from an *Aspergillus niger* neutral alpha-amylase gene in which the untranslated leader has been replaced by an untranslated leader from an *Aspergillus nidulans* or *Aspergillus oryzae* triose phosphate isomerase gene); and mutant, truncated, and hybrid promoters thereof.

In a yeast host, useful promoters are obtained from the genes for *Saccharomyces cerevisiae* enolase (ENO-1), *Saccharomyces cerevisiae* galactokinase (GAL1), *Saccharomyces cerevisiae* alcohol dehydrogenase/glyceraldehyde-3-phosphate dehydrogenase (ADH1, ADH2/GAP), *Saccharomyces cerevisiae* triose phosphate isomerase (TPI), *Saccharomyces cerevisiae* metallothionein (CUP1), and *Saccharomyces cerevisiae* 3-phosphoglycerate kinase. Other useful promoters for yeast host cells are described by Romanos et al., 1992, Yeast 8: 423-488.

The control sequence may also be a transcription terminator, which is recognized by a host cell to terminate transcription. The terminator is operably linked to the 3'-terminus of the polynucleotide encoding the polypeptide. Any terminator that is functional in the host cell may be used in the present invention.

Preferred terminators for bacterial host cells are obtained from the genes for *Bacillus clausii* alkaline protease (*aprH*), *Bacillus licheniformis* alpha-amylase (*amyL*), and *Escherichia coli* ribosomal RNA (*rrnB*).

Preferred terminators for filamentous fungal host cells are obtained from the genes for *Aspergillus nidulans* anthranilate synthase, *Aspergillus niger* glucoamylase, *Aspergillus niger* alpha-glucosidase, *Aspergillus oryzae* TAKA amylase, and *Fusarium oxysporum* trypsin-like protease.

Preferred terminators for yeast host cells are obtained from the genes for *Saccharomyces cerevisiae* enolase, *Saccharomyces cerevisiae* cytochrome C (CYC1), and *Saccharomyces cerevisiae* glyceraldehyde-3-phosphate dehydrogenase. Other useful terminators for yeast host cells are described by Romanos *et al.,* 1992, *supra.*

The control sequence may also be an mRNA stabilizer region downstream of a promoter and upstream of the coding sequence of a gene which increases expression of the gene.

Examples of suitable mRNA stabilizer regions are obtained from a *Bacillus thuringiensis cryIIIA* gene (WO 94/25612) and a *Bacillus subtilis* SP82 gene (Hue et al., 1995, Journal of Bacteriology 177: 3465-3471).

The control sequence may also be a leader, a nontranslated region of an mRNA that is important for translation by the host cell. The leader is operably linked to the 5'-terminus of the polynucleotide encoding the polypeptide. Any leader that is functional in the host cell may be used.

Preferred leaders for filamentous fungal host cells are obtained from the genes for *Aspergillus oryzae* TAKA amylase and *Aspergillus nidulans* triose phosphate isomerase.

Suitable leaders for yeast host cells are obtained from the genes for *Saccharomyces cerevisiae* enolase (ENO-1), *Saccharomyces cerevisiae* 3-phosphoglycerate kinase, *Saccharomyces cerevisiae* alpha-factor, and *Saccharomyces cerevisiae* alcohol dehydrogenase/glyceraldehyde-3-phosphate dehydrogenase (ADH2/GAP).

The control sequence may also be a polyadenylation sequence; a sequence operably linked to the 3'-terminus of the polynucleotide and, when transcribed, is recognized by the host cell as a signal to add polyadenosine residues to transcribed mRNA. Any polyadenylation sequence that is functional in the host cell may be used.

Preferred polyadenylation sequences for filamentous fungal host cells are obtained from the genes for *Aspergillus nidulans* anthranilate synthase, *Aspergillus niger* glucoamylase, *Aspergillus niger* alpha-glucosidase *Aspergillus oryzae* TAKA amylase, and *Fusarium oxysporum* trypsin-like protease.

Useful polyadenylation sequences for yeast host cells are described by Guo and Sherman, 1995, Mol. Cellular Biol. 15: 5983-5990.

The control sequence may also be a signal peptide coding region that encodes a signal peptide linked to the N-terminus of a polypeptide and directs the polypeptide into the cell's secretory pathway. The 5'-end of the coding sequence of the polynucleotide may inherently contain a signal peptide coding sequence naturally linked in translation reading frame with the segment of the coding sequence that encodes the polypeptide. Alternatively, the 5'-end of the coding sequence may contain a signal peptide coding sequence that is foreign to the coding sequence. A foreign signal peptide coding sequence may be required where the coding sequence does not naturally contain a signal peptide coding sequence. Alternatively, a foreign signal peptide coding sequence may simply replace the natural signal peptide coding sequence in order to enhance secretion of the polypeptide. However, any signal peptide coding sequence that directs the expressed polypeptide into the secretory pathway of a host cell may be used.

Effective signal peptide coding sequences for bacterial host cells are the signal peptide coding sequences obtained from the genes for *Bacillus* NCIB 11837 maltogenic amylase, *Bacillus licheniformis* subtilisin, *Bacillus licheniformis* beta-lactamase, *Bacillus stearothermophilus* alpha-amylase, *Bacillus stearothermophilus* neutral proteases (*nprT, nprS, nprM*), and *Bacillus subtilis prsA.* Further signal peptides are described by Simonen and Palva, 1993, Microbiological Reviews 57: 109-137.

Effective signal peptide coding sequences for filamentous fungal host cells are the signal peptide coding sequences obtained from the genes for *Aspergillus niger* neutral amylase, *Aspergillus niger* glucoamylase, *Aspergillus oryzae* TAKA amylase, *Humicola insolens* cellulase, *Humicola insolens* endoglucanase V, *Humicola lanuginosa* lipase, and *Rhizomucor miehei* aspartic proteinase.

Useful signal peptides for yeast host cells are obtained from the genes for *Saccharomyces cerevisiae* alpha-factor and *Saccharomyces cerevisiae* invertase.

The control sequence may also be a propeptide coding sequence that encodes a propeptide positioned at the N-terminus of a polypeptide. The resultant polypeptide is known as a proenzyme or propolypeptide (or a zymogen in some cases). A propolypeptide is generally inactive and can be converted to an active polypeptide by catalytic or autocatalytic cleavage of the propeptide from the propolypeptide. The propeptide coding sequence may be obtained from the genes for *Bacillus subtilis* alkaline protease (*aprE*), *Bacillus subtilis* neutral protease (*nprT*), *Myceliophthora thermophila* laccase (WO 95/33836), *Rhizomucor miehei* aspartic proteinase, and *Saccharomyces cerevisiae* alpha-factor.

Where both signal peptide and propeptide sequences are present, the propeptide sequence is positioned next to the N-terminus of a polypeptide and the signal peptide sequence is positioned next to the N-terminus of the propeptide sequence.

It may also be desirable to add regulatory sequences that regulate expression of the polypeptide relative to the growth of the host cell. Examples of regulatory systems are those that cause expression of the gene to be turned on or off in response to a chemical or physical stimulus, including the presence of a regulatory compound. Regulatory systems in prokaryotic systems include the *lac, tac,* and *trp* operator systems. In yeast, the ADH2 system or GAL1 system may be used. In filamentous fungi, the *Aspergillus niger* glucoamylase promoter, *Aspergillus oryzae* TAKA alpha-amylase promoter, and *Aspergillus oryzae* glucoamylase promoter may be used. Other examples of regulatory sequences are those that allow for gene amplification. In eukaryotic systems, these regulatory sequences include the dihydrofolate reductase gene that is amplified in the presence of methotrexate, and the metallothionein genes that are amplified with heavy metals. In these cases, the polynucleotide encoding the polypeptide would be operably linked with the regulatory sequence.

**Expression Vectors**

Recombinant expression vectors are described, comprising the polynucelotide, a promoter, and transcriptional and translational stop signals. The various nucleotide and control sequences may be joined together to produce a recombinant expression vector that may include one or more convenient restriction sites to allow for insertion or substitution of the polynucleotide encoding the polypeptide at such sites. Alternatively, the polynucleotide may be expressed by inserting the polynucleotide or a nucleic acid construct comprising the polynucleotide into an appropriate vector for expression. In creating the expression vector, the coding sequence is located in the vector so that the coding sequence is operably linked with the appropriate control sequences for expression.

The recombinant expression vector may be any vector (*e.g.*, a plasmid or virus) that can be conveniently subjected to recombinant DNA procedures and can bring about expression of the polynucleotide. The choice of the vector will typically depend on the compatibility of the vector with the host cell into which the vector is to be introduced. The vector may be a linear or closed circular plasmid.

The vector may be an autonomously replicating vector, *i.e.,* a vector that exists as an extrachromosomal entity, the replication of which is independent of chromosomal replication, *e.g.*, a plasmid, an extrachromosomal element, a minichromosome, or an artificial chromosome. The vector may contain any means for assuring self-replication. Alternatively, the vector may be one that, when introduced into the host cell, is integrated into the genome and replicated together with the chromosome(s) into which it has been integrated. Furthermore, a single vector or plasmid or two or more vectors or plasmids that together contain the total DNA to be introduced into the genome of the host cell, or a transposon, may be used.

The vector preferably contains one or more selectable markers that permit easy selection of transformed, transfected, transduced, or the like cells. A selectable marker is a gene the product of which provides for biocide or viral resistance, resistance to heavy metals, prototrophy to auxotrophs, and the like.

Examples of bacterial selectable markers are *Bacillus licheniformis* or *Bacillus subtilis dal* genes, or markers that confer antibiotic resistance such as ampicillin, chloramphenicol, kanamycin, neomycin, spectinomycin, or tetracycline resistance. Suitable markers for yeast host cells include, but are not limited to, ADE2, HIS3, LEU2, LYS2, MET3, TRP1, and URA3. Selectable markers for use in a filamentous fungal host cell include, but are not limited to, *amdS* (acetamidase), *argB* (ornithine carbamoyltransferase), bar (phosphinothricin acetyltransferase), *hph* (hygromycin phosphotransferase), *niaD* (nitrate reductase), *pyrG* (orotidine-5'-phosphate decarboxylase), sC (sulfate adenyltransferase), and *trpC* (anthranilate synthase), as well as equivalents thereof. Preferred for use in an *Aspergillus* cell are *Aspergillus nidulans* or *Aspergillus oryzae amdS* and *pyrG* genes and a *Streptomyces hygroscopicus bar* gene.

The vector preferably contains an element(s) that permits integration of the vector into the host cell's genome or autonomous replication of the vector in the cell independent of the genome.

For integration into the host cell genome, the vector may rely on the polynucleotide's sequence encoding the polypeptide or any other element of the vector for integration into the genome by homologous or non-homologous recombination. Alternatively, the vector may contain additional polynucleotides for directing integration by homologous recombination into the genome of the host cell at a precise location(s) in the chromosome(s). To increase the likelihood of integration at a precise location, the integrational elements should contain a sufficient number of nucleic acids, such as 100 to 10,000 base pairs, 400 to 10,000 base pairs, and 800 to 10,000 base pairs, which have a high degree of sequence identity to the corresponding target sequence to enhance the probability of homologous recombination. The integrational elements may be any sequence that is homologous with the target sequence in the genome of the host cell. Furthermore, the integrational elements may be non-encoding or encoding polynucleotides. On the other hand, the vector may be integrated into the genome of the host cell by non-homologous recombination.

For autonomous replication, the vector may further comprise an origin of replication enabling the vector to replicate autonomously in the host cell in question. The origin of replication may be any plasmid replicator mediating autonomous replication that functions in a cell. The term "origin of replication" or "plasmid replicator" means a polynucleotide that enables a plasmid or vector to replicate *in vivo.*

Examples of bacterial origins of replication are the origins of replication of plasmids pBR322, pUC19, pACYC177, and pACYC184 permitting replication in *E. coli,* and pUB110, pE194, pTA1060, and pAMβ1 permitting replication in *Bacillus.*

Examples of origins of replication for use in a yeast host cell are the 2 micron origin of replication, ARS1, ARS4, the combination of ARS1 and CEN3, and the combination of ARS4 and CEN6.

Examples of origins of replication useful in a filamentous fungal cell are AMA1 and ANS1 (Gems et al., 1991, Gene 98: 61-67; Cullen et al., 1987, Nucleic Acids Res. 15: 9163-9175; WO 00/24883). Isolation of the AMA1 gene and construction of plasmids or vectors comprising the gene can be accomplished according to the methods disclosed in WO 00/24883.

More than one copy of a polynucleotide of the present invention may be inserted into a host cell to increase production of a polypeptide. An increase in the copy number of the polynucleotide can be obtained by integrating at least one additional copy of the sequence into the host cell genome or by including an amplifiable selectable marker gene with the polynucleotide where cells containing amplified copies of the selectable marker gene, and thereby additional copies of the polynucleotide, can be selected for by cultivating the cells in the presence of the appropriate selectable agent.

The procedures used to ligate the elements described above to construct the recombinant expression vectors of the present invention are well known to one skilled in the art.

## Host Cells

Recombinant host cells are described, comprising the polynucleotide operably linked to one or more control sequences that direct the production of a polypeptide of the present invention. A construct or vector comprising a polynucleotide is introduced into a host cell so that the construct or vector is maintained as a chromosomal integrant or as a self-replicating extra-chromosomal vector as described earlier. The term "host cell" encompasses any progeny of a parent cell that is not identical to the parent cell due to mutations that occur during replication. The choice of a host cell will to a large extent depend upon the gene encoding the polypeptide and its source.

The host cell may be any cell useful in the recombinant production of a polypeptide of the present invention, *e.g.*, a prokaryote or a eukaryote.

The prokaryotic host cell may be any Gram-positive or Gram-negative bacterium. Gram-positive bacteria include, but are not limited to, *Bacillus, Clostridium, Enterococcus, Geobacillus, Lactobacillus, Lactococcus, Oceanobacillus, Staphylococcus, Streptococcus,* and *Streptomyces.* Gram-negative bacteria include, but are not limited to, *Campylobacter, E. coli, Flavobacterium, Fusobacterium, Helicobacter, Ilyobacter, Neisseria, Pseudomonas, Salmonella,* and *Ureaplasma.*

The bacterial host cell may be any *Bacillus* cell including, but not limited to, *Bacillus alkalophilus, Bacillus amyloliquefaciens, Bacillus brevis, Bacillus circulans, Bacillus clausii, Bacillus coagulans, Bacillus firmus, Bacillus lautus, Bacillus lentus, Bacillus licheniformis, Bacillus megaterium, Bacillus pumilus, Bacillus stearothermophilus, Bacillus subtilis,* and *Bacillus thuringiensis* cells.

The bacterial host cell may also be any *Streptococcus* cell including, but not limited to, *Streptococcus equisimilis, Streptococcus pyogenes, Streptococcus uberis,* and *Streptococcus equi* subsp. *Zooepidemicus* cells.

The bacterial host cell may also be any *Streptomyces* cell including, but not limited to, *Streptomyces achromogenes, Streptomyces avermitilis, Streptomyces coelicolor, Streptomyces griseus,* and *Streptomyces lividans* cells.

The introduction of DNA into a *Bacillus* cell may be effected by protoplast transformation (see, *e.g.,* Chang and Cohen, 1979, Mol. Gen. Genet. 168: 111-115), competent cell transformation (see, *e.g.,* Young and Spizizen, 1961, J. Bacteriol. 81: 823-829, or Dubnau and Davidoff-Abelson, 1971, J. Mol. Biol. 56: 209-221), electroporation (see, *e.g.,* Shigekawa and Dower, 1988, Biotechniques 6: 742-751), or conjugation (see, *e.g.,* Koehler and Thorne, 1987, J. Bacteriol. 169: 5271-5278). The introduction of DNA into an *E. coli* cell may be effected by protoplast transformation (see, *e.g.,* Hanahan, 1983, J. Mol. Biol. 166: 557-580) or electroporation (see, *e.g.,* Dower et al., 1988, Nucleic Acids Res. 16: 6127-6145). The introduction of DNA into a *Streptomyces* cell may be effected by protoplast transformation, electroporation (see, *e.g.,* Gong et al., 2004, Folia Microbiol. (Praha) 49: 399-405), conjugation (see, *e.g.,* Mazodier et al., 1989, J. Bacteriol. 171: 3583-3585), or transduction (see, *e.g.,* Burke et al., 2001, Proc. Natl. Acad. Sci. USA 98: 6289-6294). The introduction of DNA into a *Pseudomonas* cell may be effected by electroporation (see, *e.g.,* Choi et al., 2006, J. Microbiol. Methods 64: 391-397) or conjugation (see, *e.g.,* Pinedo and Smets, 2005, Appl. Environ. Microbiol. 71: 51-57). The introduction of DNA into a *Streptococcus* cell may be effected by natural competence (see, *e.g.,* Perry and Kuramitsu, 1981, Infect. Immun. 32: 1295-1297), protoplast transformation (see, *e.g.,* Catt and Jollick, 1991, Microbios 68: 189-207), electroporation (see, *e.g.,* Buckley et al., 1999, Appl. Environ. Microbiol. 65: 3800-3804), or conjugation (see, *e.g.,* Clewell, 1981, Microbiol. Rev. 45: 409-436). However, any method known in the art for introducing DNA into a host cell can be used.

The host cell may also be a eukaryote, such as a mammalian, insect, plant, or fungal cell.

The host cell may be a fungal cell. "Fungi" as used herein includes the phyla Ascomycota, Basidiomycota, Chytridiomycota, and Zygomycota as well as the Oomycota and all mitosporic fungi (as defined by Hawksworth et al., In, Ainsworth and Bisby's Dictionary of The Fungi, 8th edition, 1995, CAB International, University Press, Cambridge, UK).

The fungal host cell may be a yeast cell. "Yeast" as used herein includes ascosporogenous yeast (Endomycetales), basidiosporogenous yeast, and yeast belonging to the Fungi Imperfecti (Blastomycetes). Since the classification of yeast may change in the future, for the purposes of this invention, yeast shall be defined as described in Biology and Activities of Yeast (Skinner, Passmore, and Davenport, editors, Soc. App. Bacteriol. Symposium Series No. 9, 1980).

The yeast host cell may be a *Candida, Hansenula, Kluyveromyces, Pichia, Saccharomyces, Schizosaccharomyces,* or *Yarrowia* cell, such as a *Kluyveromyces lactis, Saccharomyces carlsbergensis, Saccharomyces cerevisiae, Saccharomyces diastaticus, Saccharomyces douglasii, Saccharomyces kluyveri, Saccharomyces norbensis, Saccharomyces oviformis,* or *Yarrowia lipolytica* cell.

The fungal host cell may be a filamentous fungal cell. "Filamentous fungi" include all filamentous forms of the subdivision Eumycota and Oomycota (as defined by Hawksworth *et al.*, 1995, *supra*). The filamentous fungi are generally characterized by a mycelial wall composed of chitin, cellulose, glucan, chitosan, mannan, and other complex polysaccharides. Vegetative growth is by hyphal elongation and carbon catabolism is obligately aerobic. In contrast, vegetative growth by yeasts such as *Saccharomyces cerevisiae* is by budding of a unicellular thallus and carbon catabolism may be fermentative.

The filamentous fungal host cell may be an *Acremonium, Aspergillus, Aureobasidium, Bjerkandera, Ceriporiopsis, Chrysosporium, Coprinus, Coriolus, Cryptococcus, Filibasidium, Fusarium, Humicola, Magnaporthe, Mucor, Myceliophthora, Neocallimastix, Neurospora, Paecilomyces, Penicillium, Phanerochaete, Phlebia, Piromyces, Pleurotus, Schizophyllum, Talaromyces, Thermoascus, Thielavia, Tolypocladium, Trametes,* or *Trichoderma* cell.

For example, the filamentous fungal host cell may be an *Aspergillus awamori, Aspergillus foetidus, Aspergillus fumigatus, Aspergillus japonicus, Aspergillus nidulans, Aspergillus niger, Aspergillus oryzae, Bjerkandera adusta, Ceriporiopsis aneirina, Ceriporiopsis caregiea, Ceriporiopsis gilvescens, Ceriporiopsis pannocinta, Ceriporiopsis rivulosa, Ceriporiopsis subrufa, Ceriporiopsis subvermispora, Chrysosporium inops, Chrysosporium keratinophilum, Chrysosporium lucknowense, Chrysosporium merdarium, Chrysosporium pannicola, Chrysosporium queenslandicum, Chrysosporium tropicum, Chrysosporium zonatum, Coprinus cinereus, Coriolus hirsutus, Fusarium bactridioides, Fusarium cerealis, Fusarium crookwellense, Fusarium culmorum, Fusarium graminearum, Fusarium graminum, Fusarium heterosporum, Fusarium negundi, Fusarium oxysporum, Fusarium reticulatum, Fusarium roseum, Fusarium sambucinum, Fusarium sarcochroum, Fusarium sporotrichioides, Fusarium sulphureum, Fusarium torulosum, Fusarium trichothecioides, Fusarium venenatum, Humicola insolens, Humicola lanuginosa, Mucor miehei, Myceliophthora thermophila, Neurospora crassa, Penicillium purpurogenum, Phanerochaete chrysosporium, Phlebia radiata, Pleurotus eryngii, Thielavia terrestris, Trametes villosa, Trametes versicolor, Trichoderma harzianum, Trichoderma koningii, Trichoderma longibrachiatum, Trichoderma reesei,* or *Trichoderma viride* cell.

Fungal cells may be transformed by a process involving protoplast formation, transformation of the protoplasts, and regeneration of the cell wall in a manner known *per se.* Suitable procedures for transformation of *Aspergillus* and *Trichoderma* host cells are described in EP 238023, Yelton et al., 1984, Proc. Natl. Acad. Sci. USA 81: 1470-1474, and Christensen et al., 1988, Bio/Technology 6: 1419-1422. Suitable methods for transforming *Fusarium* species are described by Malardier et al., 1989, Gene 78: 147-156, and WO 96/00787. Yeast may be transformed using the procedures described by Becker and Guarente, In Abelson, J.N. and Simon, M.I., editors, Guide to Yeast Genetics and Molecular Biology, Methods in Enzymology, Volume 194, pp 182-187, Academic Press, Inc., New York; Ito et al., 1983, J. Bacteriol. 153: 163; and Hinnen et al., 1978, Proc. Natl. Acad. Sci. USA 75: 1920.

## Methods of Production

Method of producing the polynucleotide are described, comprising (a) cultivating a cell, which in its wild-type form produces the polypeptide, under conditions conducive for production of the polypeptide; and (b) recovering the polypeptide.

Methods of producing the polypeptide are described, comprising (a) cultivating a recombinant host cell of the present invention under conditions conducive for production of the polypeptide; and (b) recovering the polypeptide.

The host cells are cultivated in a nutrient medium suitable for production of the polypeptide using methods known in the art. For example, the cell may be cultivated by shake flask cultivation, or small-scale or large-scale fermentation (including continuous, batch, fed-batch, or solid state fermentations) in laboratory or industrial fermentors performed in a suitable medium and under conditions allowing the polypeptide to be expressed and/or isolated. The cultivation takes place in a suitable nutrient medium comprising carbon and nitrogen sources and inorganic salts, using procedures known in the art. Suitable media are available from commercial suppliers or may be prepared according to published compositions (*e.g.*, in catalogues of the American Type Culture Collection). If the polypeptide is secreted into the nutrient medium, the polypeptide can be recovered directly from the medium. If the polypeptide is not secreted, it can be recovered from cell lysates.

The polypeptide may be detected using methods known in the art that are specific for the polypeptides. These detection methods include, but are not limited to, use of specific antibodies, formation of an enzyme product, or disappearance of an enzyme substrate. For example, an enzyme assay may be used to determine the activity of the polypeptide.

The polypeptide may be recovered using methods known in the art. For example, the polypeptide may be recovered from the nutrient medium by conventional procedures including, but not limited to, collection, centrifugation, filtration, extraction, spray-drying, evaporation, or precipitation.

The polypeptide may be purified by a variety of procedures known in the art including, but not limited to, chromatography (*e.g.*, ion exchange, affinity, hydrophobic, chromatofocusing, and size exclusion), electrophoretic procedures (*e.g.*, preparative isoelectric focusing), differential solubility (*e.g.*, ammonium sulfate precipitation), SDS-PAGE, or extraction (see, *e.g.,* Protein Purification, Janson and Ryden, editors, VCH Publishers, New York, 1989) to obtain substantially pure polypeptides.

## Compositions comprising a GH5 xylanase

In one embodiment, the present invention relates to a baking composition comprising a GH5 xylanase and a GH11 xylanase in particular a GH5_21 xylanase or a GH5_34 xylanase.

The additional xylanase may be of microbial origin, e.g., derived from a bacterium or fungus, such as a strain of *Aspergillus,* in particular of *A. aculeatus, A. niger, A. awamori,* or *A. tubigensis,* or from a strain of *Trichoderma,* e.g., *T. reesei,* or from a strain of *Humicola,* e.g. *H. insolens.*

Commercially available xylanase preparations include PANZEA BG™, PENTOPAN MONO BG™ and PENTOPAN 500 BG™ (available from Novozymes A/S), GRINDAMYL POWERBAKE™ (available from Danisco), and BAKEZYME BXP 5000™ and BAKEZYME BXP 5001™ (available from DSM).

Panzea is a GH8 xylanase, and Pentopan is a GH11 xylanase.

The composition may be prepared in accordance with methods known in the art and may have any physical appearance such as liquid, paste or solid. For instance, the composition may be formulated using methods known in the art of formulating enzymes and/or pharmaceutical products, e.g., into coated or uncoated granules or micro-granules. The xylanase and any additional enzymes to be included in the composition may be stabilized in accordance with methods known in the art, e.g., by stabilizing the polypeptide in the composition by adding and antioxidant or reducing agent to limit oxidation or the polypeptide of it may be stabilized by adding polymers such as PVP, PVA, PEG or other suitable polymers known to be beneficial to the stability of polypeptides in solid or liquid compositions. When formulating a xylanase enzyme as a granulate or agglomerated powder the particles particularly have a narrow particle size distribution with more than 95% (by weight) of the particles in the range from 25 to 500 μm. Granulates and agglomerated powders may be prepared by conventional methods, e.g. by spraying a xylanase enzyme and the emulsifier, onto a carrier in a fluid-bed granulator. The carrier may consist of particulate cores having a suitable particle size. The carrier may be soluble or insoluble, e.g. a salt (such as NaCl or sodium sulfate), a sugar (such as sucrose or lactose), a sugar alcohol (such as sorbitol), starch, rice, corn grits, or soy. The composition is preferably in the form of a dry powder or a granulate, in particular a non-dusting granulate, or a liquid.

Hence, a composition comprising a granule comprising a GH5 xylanase and a granule comprising a GH11 xylanase in particular a GH5_21 xylanase or a GH5_34 xylanase, is also described; or a liquid comprising a GH5 xylanase and a GH11 xylanase, in particular a GH5_21 xylanase or a GH5_34 xylanase.

In a particular embodiment, the baking composition is a dough, a flour composition, or a flour pre-mix comprising a GH5 xylanase enzyme and a GH11 xylanase.

The term "pre-mix" is defined herein to be understood in its conventional meaning, i.e., as a mix of baking agents, generally including flour, which may be used not only in industrial bread-baking plants, but also in retail bakeries.

The pre-mix may be prepared by mixing the baking composition of the invention with a suitable carrier such as flour, starch, a sugar, a complex carbohydrate such as maltodextrin, or a salt. The pre-mix may contain other dough and/or bread additives, e.g. any of the additives, including enzymes, mentioned herein.

The amount of the GH5 xylanase enzyme in the composition may be between 0.5-5000 mg polypeptide per kg dry matter, 1.0-1000 mg polypeptide per kg dry matter, 5.0-100 mg polypeptide per kg dry matter, 5.0-50 mg polypeptide per kg dry matter, 5.0-25 mg polypeptide per kg dry matter, 5.0-15 mg polypeptide per kg dry matter, or more preferably 5.0-10 mg/kg per kg dry matter.

Optionally, additional enzymes, such as an amylase, an anti-staling amylase, a lipase, a galactolipase, a phospholipase, a protease, a transglutaminase, a cellulase, a hemicellulase, an acyltransferase, a protein disulfide isomerase, a pectinase, a pectate lyase, an oxidoreductase, a peroxidase, a laccase, a glucose oxidase, a pyranose oxidase, a hexose oxidase, a lipoxygenase, an L-amino acid oxidase, a carbohydrate oxidase, a sulfurhydryl oxidase, and a glucoamylase may be used together with the xylanase(s) in the dough or the composition.

The additional enzyme may be of any origin, including mammalian and plant, and preferably of microbial (bacterial, yeast or fungal) origin.

The glucoamylase for use in the present invention include the *A. niger* G1 or G2 glucoamylase (Boel et al. (1984), EMBO J. 3 (5), p. 1097-1102), or the *A. awamori* glucoamylase disclosed in WO 84/02921, or the *A. oryzae* glucoamylase (Agric. Biol. Chem. (1991), 55 (4), p. 941-949).

The amylase may be fungal or bacterial, e.g., a maltogenic alpha-amylase from B. *stearothermophilus* or an alpha-amylase from *Bacillus,* e.g., B. *licheniformis* or B. *amyloliquefaciens,* a beta-amylase, e.g., from plant (e.g. soy bean) or from microbial sources (e.g. *Bacillus*), or a fungal alpha-amylase, e.g. from *A. oryzae.*

Suitable commercial maltogenic alpha-amylases include NOVAMYL™ and NOVAMYL 3D™ (available from Novozymes A/S).

Suitable commercial fungal alpha-amylase compositions include, e.g., BAKEZYME P 300™ (available from DSM) and FUNGAMYL 2500 SG™, FUNGAMYL 4000 BG™, FUNGAMYL 800 L™, FUNGAMYL ULTRA BG™ and FUNGAMYL ULTRA SG™ (available from Novozymes A/S).

The glucose oxidase may be a fungal glucose oxidase, in particular an *Aspergillus* niger glucose oxidase (such as GLUZYME™, available from Novozymes A/S, Denmark).

The protease may be from *Bacillus,* e.g., *B. amyloliquefaciens.*

The phospholipase may have phospholipase A1, A2, B, C, D or lysophospholipase activity; it may or may not have lipase activity. It may be of animal origin, e.g. from pancreas, snake venom or bee venom, or it may be of microbial origin, e.g. from filamentous fungi, yeast or bacteria, such as *Aspergillus or Fusarium, e.g. A. niger, A. oryzae* or *F. oxysporum.* A preferred lipase/phospholipase from *Fusarium oxysporum* is disclosed in WO 98/26057. Also, the variants described in WO 00/32758 may be used.

Suitable phospholipase compositions are LIPOPAN F™ and LIPOPAN XTRA™ (available from Novozymes A/S) or PANAMORE GOLDEN™ and PANAMORE SPRING™ (available from DSM).

**Dough**

A method for preparing a dough or a baked product prepared from the dough which method comprises incorporating into dough a GH5 xylanase and a GH11 xylanase, is described.

A dough comprising flour, water, and an effective amount of a baking composition or a premix comprising GH5 xylanase and GH 11 xylanase, is described.

Methods for preparing a dough or a baked product are described, comprising incorporating into the dough an effective amount of a baking composition comprising GH5 xylanase and GH11 xylanase which improves one or more properties of the dough or the baked product obtained from the dough relative to a dough or a baked product in which the xylanase(s) are not incorporated.

The phrase "incorporating into the dough" is defined herein as adding the baking composition according to the invention to the dough, to any ingredient from which the dough is to be made, and/or to any mixture of dough ingredients from which the dough is to be made. In other words, the baking composition of the invention may be added in any step of the dough preparation and may be added in one, two or more steps. The composition is added to the ingredients of a dough that is kneaded and baked to make the baked product using methods well known in the art.

The term "effective amount" is defined herein as an amount of baking composition according to the invention that is sufficient for providing a measurable effect on at least one property of interest of the dough and/or baked product.

The term "dough" is defined herein as a mixture of flour and other ingredients firm enough to knead or roll.

The dough of the invention may comprise flour derived from any cereal grain, including wheat, barley, rye, oat, corn, sorghum, rice and millet, in particular wheat and/or corn.

The dough may also comprise other conventional dough ingredients, e.g., proteins, such as milk powder, gluten, and soy; eggs (either whole eggs, egg yolks or egg whites); an oxidant such as ascorbic acid, potassium bromate, potassium iodate, azodicarbonamide (ADA) or ammonium persulfate; an amino acid such as L-cysteine; a sugar; a salt such as sodium chloride, calcium acetate, sodium sulfate or calcium sulfate.

The dough may also comprise an emulsifier selected from the group consisting of diacetyl tartaric acid esters of monoglycerides (DATEM), sodium stearoyl lactylate (SSL), calcium stearoyl lactylate (CSL), ethoxylated mono- and diglycerides (EMG), polysorbates (PS), succinylated monoglycerides (SMG) and mixtures thereof.

The dough of the invention may be fresh, frozen or par-baked (pre-baked).

The dough of the invention is normally a leavened dough or a dough to be subjected to leavening. The dough may be leavened in various ways, such as by adding chemical leavening agents, e.g., sodium bicarbonate or by adding a leaven (fermenting dough), but it is preferred to leaven the dough by adding a suitable yeast culture, such as a culture of *Saccharomyces cerevisiae* (baker's yeast), e.g., a commercially available strain of S. *cerevisiae*.

According to the invention, the amount of GH5 xylanase in the dough may typically be between 0.01-0.10 mg polypeptide per kg flour in the dough; in particular 0.01-05 mg polypeptide per kg flour.

According to the invention, the amount of GH8, GH10 and GH11 xylanase in the dough may typically be between 0.01-100 mg polypeptide per kg flour in the dough; in particular the amount of GH8, GH10 and GH11 xylanase in the dough may typically be between 0.1-100 mg polypeptide per kg flour in the dough; especially the amount of GH8, GH10 and GH11 xylanase in the dough may typically be between 1-100 mg polypeptide per kg flour in the dough.

**Product**

The process of the invention may be used for any kind of product prepared from dough, either of a soft or a crisp character, either of a white, light or dark type. Examples are bread (in particular white, whole-meal or rye bread), typically in the form of loaves or rolls, pan bread, toast bread, open bread, pan bread with and without lid, buns, hamburger buns, rolls, baguettes, brown bread, whole meal bread, rich bread, bran bread, flat bread, tortilla, pita, Arabic bread, Indian flat bread, steamed bread, and any variety thereof.

The present invention is further described by the following examples that should not be construed as limiting the scope of the invention.

**Examples**

Material (SEQ ID:1):

Elephant dung was obtained from a six years old female Asian elephant (name "Kandy") living in the zoological garden in Hamburg, Germany. The DNA isolation was performed with the QIAamp DNA Stool kit from Qiagen (Hilden, Germany) as described in the manufacturer's protocol.

Genome sequencing, the subsequent assembly of reads and the gene discovery (i.e. annotation of gene functions) is known to the person skilled in the art and the service can be purchased commercially.

Based on the nucleotide sequences, one codon optimized synthetic gene was synthesized and purchased commercially.

The expression plasmid (BcSP-His-tag-xylanase) was transformed into a *Bacillus subtilis* expression host. The xylanase BcSP-fusion genes were integrated by homologous recombination into the *Bacillus subtilis* host cell genome upon transformation.

The gene construct was expressed under the control of a triple promoter system (as described in WO 99/43835). The gene coding for chloramphenicol acetyltransferase was used as marker (as described in (Diderichsen et al., 1993, Plasmid 30: 312-315)). Transformants were selected on LB media agar supplemented with 6 microgram of chloramphenicol per ml. One recombinant *Bacillus subtilis* clone containing the xylanase expression construct was selected and was cultivated on a rotary shaking table in 500 ml baffled Erlenmeyer flasks each containing 100 ml yeast extract-based media. After 3-5 days' cultivation time at 30°C to 37°C, enzyme containing supernatants were harvested by centrifugation, and the enzyme was purified by His-tag purification.

**Example 1: not part of the invention GH5 xylanase (SEQ ID No:1) in baking**

**Work done:**

Bread was baked according to the straight dough method with normal and extended proofing using the following recipe and process:

Recipe:

| Ingredient | amount (on flour basis (w/w)) |
|---|---|
| Ascorbic acid | 40 ppm |
| Yeast | 4% |
| Salt | 1.5% |
| Sucrose | 1.5% |
| Water | 58% (to be optimized for each flour |
| Wheat flour flour (Kolibri, Meneba, NL) | 100% |
| + enzymes according to Table 1: Dosages of enzyme | |

***Table 1: Dosages of enzyme* (*on flour basis*)**

| Dough | 1 | 2 | 3 |
|---|---|---|---|
| GH5 xylanase (mg EP/kg flour) (SEQ ID NO:1) | - | 0.02 | - |

Procedure:

1. Scaling of ingredients.

2. Addition of salt, sucrose, yeast, ascorbic acid, and enzymes into the mixer bowl.

3. Temperature adjustment (to give a dough temperature of 26°C after mixing), scaling and addition of water into mixer bowl.

4. Addition of flour into mixer bowl.

5. Mixing 1 min at 50 rpm and 6 min at 150 rpm using a pin mixer (Bear Varimixer RN20/VL2, Wodschow & Co., DK).

6. The dough was taken from the mixer bowl and the temperature was determined to secure that each dough had the same temperature (dough temperatures may vary 1°C between different dough). The dough parameters were determined (dough evaluation after mixing) and the dough was molded.

7. The dough was given 20 min bench-time at room temperature (21°C) under plastic cover, and the second dough evaluation was performed (dough parameters after bench-time).

8. The dough was scaled (350 g / bread) and molded thereafter.

9. The molded dough was given 15 minutes bench time covered in plastic.

10. The dough for bread was shaped in a sheeter (M0671 MPB-001, Glimek, SE). The sheeted dough was transferred to 1200 ml pans (Top 160x110x85mm) which were put on baking sheet.

11. The dough was proofed at 32°C, 86% relative humidity for 55 minutes.

12. The bread was baked in a deck oven (Infra, Wachtel, DE), for 35 min at 230°C with steam (damper opens after 25 min in order to let out the steam from the oven).

13. The bread was taken out of the pans after baking and put on a baking sheet.

14. The bread was allowed to cool to room temperature.

15. The breads were evaluated regarding volume.

Manual dough evaluation

The dough properties were evaluated directly after mixing and after 20 min bench time using the parameters, definitions and evaluation methods as described in Table 2 below. A scale between 0-10 was used where the control dough (dough 1 without any enzyme additions) was given the score 5 and the other dough with enzymes added were evaluated relative to the control. The further away from the control the dough was judged to be, the higher/lower score the dough was given.

***Table 2 Dough evaluation***

| Parameters | Definition | Evaluation method | Scale |
|---|---|---|---|
| Stickiness | The degree to which a dough adheres to ones hands or other surfaces | A 3 cm deep cut is made in the middle of the dough. Stickiness is evaluated by touch of the fresh cut. surface with the whole palm of the hand | Less sticky 0-4<br>Control 5<br>More sticky 6-10 |
| Softness | The degree to, or ease with, which a dough will compress or resist compression | Is measured by squeezing and feeling the dough | Less soft 0-4<br>Control 5<br>More soft 6-10 |
| Elasticity | The ability of a dough to resist stretching as well as to return to its original size and shape when the force is removed | A dough ball (~30g) is rolled to a dough string of 10 cm, which is pulled gently in each end to feel the resistance / the elasticity. | Less elastic 0-4<br>Control 5<br>More elastic 6-10 |
| Extensibility | The degree to which a dough can be stretched without tearing | A dough ball (~ 30g) is gently stretched to form a "window" to feel the extensibility | Less extensible 0-4<br>Control 5<br>More extensible 6-10 |

Volume determination

The specific volume was measured using the Volscan profiler 600 (Stable microsystems, UK) running on the Volscan profiler software.

Each bread was mounted in the machine.

The weight of each loaf was automatically determined with the built-in balance of the Volscan instrument.

The volume of each loaf was calculated from the 3D image created by the instrument when each loaf of bread was rotated with a speed of 1.5 rps (revolution per second) while it was scanned with a laser beam taking 3 mm vertical steps per revolution.

The output of the instrument was weight (g) and volume (ml) for each bread. From the weight and volume, the specific volume was calculated for each bread according to Equation 1 and the specific volume index was calculated according to Equation 2. The reported value is the average of 2 breads from the same dough.

Equation 1

Specific volume (ml/g) = volume (in ml) / weight (in g)

Equation 2

Specific volume index (%) = Specific volume of bread with enzyme (in ml/g) / Specific volume of bread without enzyme (in ml/g) * 100

**Results**

When 0.02 mg EP/kg flour of GH5 xylanase (SEQ ID NO:1) was added to bread dough with an extra 2% water in order to increase the volume, the stickiness decreased from a dough evaluation score of 5 to 3, which is comparable to the control dough with the optimal water level.

This stickiness reduction effect of GH5 xylanase was seen without influencing any other properties of the bread such as bread volume (Table 5).

Dough properties

***Table 3 Dough properties after mixing***

| | Control (with 2% extra water) | GH5 - 0.02 mg EP/kg flour (with 2% extra water) | Control with optimal water % |
|---|---|---|---|
| Stickiness | 5 | 3 | 3 |
| Softness | 5 | 4 | 3 |
| Extensibility | 5 | 4 | 3 |
| Elasticity | 5 | 5 | 7 |

***Table 4 Dough properties after 20 min bench time***

| | Control (with 2% extra water) | GH5 - 0.02 mg EP/kg flour (with 2% extra water) | Control with optimal water % |
|---|---|---|---|
| Stickiness | 5 | 3 | 3 |
| Softness | 5 | 4 | 3 |
| Extensibility | 5 | 5 | 3 |
| Elasticity | 5 | 5 | 7 |

Bread volume

***Table 5 Volume and specific volume of bread proofed for 55 min***

| | Control (with 2% extra water) | GH5 - 0.02 mg EP/kg flour (with 2% extra water) | Control with optimal water % |
|---|---|---|---|
| Specific volume in ml/g | 3.57 | 3.54 | 3.28 |
| Specific volume index % | 100 | 99 | 92 |

**Conclusion:**

GH5 xylanase (0.02 mg EP/kg flour) was able to reduce dough stickiness caused by adding 2% (w/w) extra water to the dough. Adding 2% extra water results in an increased volume and with addition of GH5 the dough stickiness is reduced without influencing the volume.

**Example 2:**

**GH5 xylanase (SEQ ID NO:1) and Pentopan in baking**

**Work done:**

Bread was baked according to the straight dough method with normal and extended proofing using the following recipe and process.

Recipe:

| *Ingredient* | *amount (on flour basis (w/w))* |
|---|---|
| Ascorbic acid | 40 ppm |
| Yeast | 4% |
| Salt | 1.5% |
| Sucrose | 1.5% |
| Water | 61% (to be optimized for each flour) |
| Wheat flour (Kolibri, Meneba, NL) | 100% |
| + enzymes according to Table 6: Dosage of enzymes | |

**Table 6 Dosages enzyme (on flour basis)**

| Dough | 1 | 2 | 3 |
|---|---|---|---|
| GH5 xylanase (mg EP/kg flour) | - | - | 0.04 |
| Pentopan Mono (ppm) | - | 40 | 40 |

Procedure:

1. Scaling of ingredients

2. Addition of salt, sucrose, yeast, ascorbic acid and enzymes into the mixer bowl.

3. Temperature adjustment (to give a dough temperature of 26°C after mixing), scaling and addition of water into mixer bowl.

4. Addition of flour into mixer bowl.

5. Mixing 3 min at 63 rpm and 6 min at 90 rpm using a spiral mixer (SPK8, Diosna, DE).

6. The dough was taken from the mixer bowl and the temperature was determined to secure that each dough had the same temperature (dough temperatures may vary 1°C between different dough). The dough parameters were determined (dough evaluation after mixing) and the dough was molded.

7. The dough was given 20 min bench-time at room temperature (21°C) under plastic cover and the second dough evaluation was performed (dough parameters after bench-time).

8. The dough was scaled (350 g / bread) and molded thereafter.

9. The molded dough was given 15 minutes bench time covered in plastic

10. The dough for bread was shaped in a sheeter (M0671 MPB-001, Glimek, SE). The sheeted doughs were transferred to 1200 ml pans (Top 160x110x85mm) which were put on baking sheet.

11. The doughs were proofed at 32°C, 86% relative humidity for 55 min or 80 min.

12. The bread was baked in a deck oven (Infra, Wachtel, DE), for 35 min at 230°C with steam (damper opens after 25 min in order to let out the steam from the oven).

13. The bread was taken out of the pans after baking and put on a baking sheet.

14. The bread was allowed to cool to room temperature.

15. The breads were evaluated regarding volume, external and internal bread evaluation.

Manual dough evaluation

The dough properties were evaluated directly after mixing and after 20 min bench time using the parameters, definitions and evaluation methods as described in Table 7 below. A scale between 0-10 was used where the control dough (dough 1 without any enzyme additions) was given the score 5 and the other dough with enzymes added were evaluated relative to the control. The further away from the control the dough was judged to be, the higher/lower score the dough was given.

**Table 7 Dough evaluation**

| Parameters | Definition | Evaluation method | Scale |
|---|---|---|---|
| Stickiness | The degree to which a dough adheres to ones hands or other surfaces | A 3 cm deep cut is made in the middle of the dough. Stickiness is evaluated by touch of the fresh cut. surface with the whole palm of the hand | Less sticky 0-4<br>Control 5<br>More sticky 6-10 |
| Softness | The degree to, or ease with, which a dough will compress or resist compression | Is measured by squeezing and feeling the dough | Less soft 0-4<br>Control 5<br>More soft 6-10 |
| Elasticity | The ability of a dough to resist stretching as well as to return to its original size and shape when the force is removed | A dough ball (~30g) is rolled to a dough string of 10 cm, which is pulled gently in each end to feel the resistance / the elasticity. | Less elastic 0-4<br>Control 5<br>More elastic 6-10 |
| Extensibility | The degree to which a dough can be stretched without tearing | A dough ball (~ 30g) is gently stretched to form a "window" to feel the extensibility | Less extensible 0-4<br>Control 5<br>More extensible 6-10 |

Volume determination

The specific volume was measured using the Volscan profiler 600 (Stable microsystems, UK) running on the Volscan profiler software.

Each bread was mounted in the machine.

The weight of each loaf was automatically determined with the built-in balance of the Volscan instrument.

The volume of each loaf was calculated from the 3D image created by the instrument when each loaf of bread was rotated with a speed of 1.5 rps (revolution per second) while it was scanned with a laser beam taking 3 mm vertical steps each revolution.

The output of the instrument was weight (g) and volume (ml) for each bread. From the weight and volume the specific volume was calculated for each bread according to Equation 1 and the specific volume index was calculated according to Equation 2. The reported value is the average of 2 breads from the same dough.

Equation 1

Specific volume (ml/g) = volume (in ml) / weight (in g)

Equation 2

Specific volume index (%) = Specific volume of bread with enzyme (in ml/g) / Specific volume of bread without enzyme (in ml/g) * 100

Bread evaluation

The external and internal bread properties were evaluated using the parameters, definitions and evaluation methods as described in Table 8 and Table 9 below. A scale between 0-10 was used where the control bread (bread from dough 1 without any enzyme additions) was given the score 5 and the other breads were evaluated relative to the control. The further away from the control the bread was judged to be, the higher/lower score the bread was given.

**Table 8 External bread evaluation**

| Parameters | Definition | Evaluation method | Scale |
|---|---|---|---|
| Crust color | Degree of crust browning intensity | The bread are placed beside each other and the color intensity is evaluated visually | Less dark 0-4<br>Control 5<br>More dark 6-10 |
| Crispness | Degree of friability/elasticity of the crust | The crust is pressed down with the fingers | Less crispy 0-4<br>Control 5<br>More crispy 6-10 |

Internal bread evaluation

Breads were sliced on a toast slicer (Daub Verhoeven , NL). Bread slices were placed beside each other for visual evaluation.

**Table 9 Internal bread evaluation**

| Parameters | Definition | Evaluation method | Scale |
|---|---|---|---|
| Uniformity | Describes the cell size uniformity | Visually evaluation of uniformity | Less uniform 0-4<br>Control 5<br>More uniform 6-10 |
| Cell size | Describes the size of the crumb cells | Visually evaluation of cell size | Larger cells 0-4<br>Control 5<br>Smaller cells 6-10 |

(continued)

| Parameters | Definition | Evaluation method | Scale |
|---|---|---|---|
| Cell wall | Describes the thickness of the cell walls | Visually evaluation of the cell thickness | Thicker cell walls 0-4<br>Control 5<br>Thinner cell wall 6-10 |
| Cell form | Describes the shape and the depth of the cells which can be from round to elongated | Visually evaluation of the cell form | Rounder 0-4<br>Control 5<br>More elongated 6-10 |
| Crumb color | The degree of lightness of the crumb | Visually evaluation of the lightness | Darker 0-4<br>Control 5<br>Brighter 6-10 |

**Results**

When 40 ppm Pentopan Mono was added to bread dough, the stickiness and softness increased from a dough evaluation score of 5 to 7. If 0.04 mg EP/kg flour of the xylanase GH5 was added together with 40 ppm Pentopan Mono the stickiness and softness score remained at a dough evaluation score comparable to the control after bench time as can be seen in Table 10.

This stickiness and softness reduction effect of GH5_21 was seen without influencing any other properties of the bread such as bread volume (Table 12 and Table 13) or bread properties (Table 14 and Table 15).

Dough properties

**Table 10 Dough properties after mixing**

| | Control | Pentopan Mono (40ppm) | Pentopan Mono (40ppm) + GH5 (0.04 mg EP/kg flour) |
|---|---|---|---|
| Stickiness | 5 | 7 | 6 |
| Softness | 5 | 7 | 6 |
| Extensibility | 5 | 5 | 6 |
| Elasticity | 5 | 5 | 4 |

**Table 11 Dough properties after 20 min bench time**

| | Control | Pentopan Mono (40ppm) | Pentopan Mono (40ppm) + GH5 (0.04 mg EP/kg flour) |
|---|---|---|---|
| Stickiness | 5 | 7 | 5 |
| Softness | 5 | 7 | 6 |
| Extensibility | 5 | 5 | 6 |
| Elasticity | 5 | 5 | 4 |

Bread volume

**Table 12 Volume and specific volume of bread proofed for 55 min**

| | Control | Pentopan Mono (40ppm) | Pentopan Mono (40ppm) + GH5 (0.04 mg EP/kg flour) |
|---|---|---|---|
| Specific volume in ml/g | 3.94 | 4.29 | 4.25 |
| Specific volume index % | 100 | 109 | 108 |

**Table 13 Volume and specific volume of bread proofed for 80 min**

| | Control | Pentopan Mono (40ppm) | Pentopan Mono (40ppm) + GH5 (0.04 mg EP/kg flour) |
|---|---|---|---|
| Specific volume in ml/g | 4.36 | 4.96 | 4.90 |
| Specific volume index % | 100 | 114 | 112 |

Bread properties

**Table 14 External and internal evaluation of bread proofed for 55 min**

| | Control | Pentopan Mono (40ppm) | Pentopan Mono (40ppm) + GH5 (0.04 mg EP/kg flour) |
|---|---|---|---|
| Crust colour | 5 | 5 | 5 |
| Crispiness | 5 | 5 | 5 |
| Uniform | 5 | 5 | 5 |
| Cell size | 5 | 5 | 5 |
| Cell wall | 5 | 5 | 5 |
| Cell form | 5 | 5 | 5 |
| Crumb colour | 5 | 5 | 5 |

**Table 15 External and internal evaluation of bread proofed for 80 min**

| | Control | Pentopan Mono (40ppm) | Pentopan Mono (40ppm) + GH5 (0.04 mg EP/kg flour) |
|---|---|---|---|
| Crust colour | 5 | 5 | 5 |
| Crispiness | 5 | 5 | 5 |
| Uniform | 5 | 5 | 5 |
| Cell size | 5 | 5 | 5 |
| Cell wall | 5 | 5 | 5 |
| Cell form | 5 | 5 | 5 |
| Crumb colour | 5 | 5 | 5 |

**Conclusion:**

GH5 xylanase (SEQ ID NO:1) (0.04 mg EP/kg flour) together with 40 ppm Pentopan Mono was able to reduce dough stickiness compared to 40 ppm Pentopan Mono alone without influencing the volume or the bread properties.

## Claims

1. A method for preparing a dough-based product, comprising adding a GH5 xylanase and a GH11 xylanase to a dough.

2. The method according to claim 1, wherein the GH5 xylanase has at least 70% identity to SEQ ID NO: 1.

3. The method according to any of the preceding claims, wherein the dough-based product is a bread.

4. The method according to any of the preceding claims, wherein the dough comprises wheat and/or corn.

5. The method according to any of the preceding claims, wherein additionally one or more enzymes selected from the group consisting of an amylase, an anti-staling amylase, a lipase, a galactolipase, a phospholipase, a protease, a transglutaminase, a cellulase, a hemicellulase, an acyltransferase, a protein disulfide isomerase, a pectinase, a pectate lyase, an oxidoreductase, a peroxidase, a laccase, a glucose oxidase, a pyranose oxidase, a hexose oxidase, a lipoxygenase, an L-amino acid oxidase, a carbohydrate oxidase, a sulfurhydryl oxidase, and a glucoamylase is added to the dough.

6. A dough prepared by adding a GH5 xylanase and a GH 11 xylanase to dough ingredients.

7. A baking composition comprising a GH5 xylanase and a GH11 xylanase.

8. The baking composition according to claim 7, which is a dough, a flour composition, or a flour pre-mix.

9. The baking composition according to any of claims 7-8, which is in the form of a granulate or an agglomerated powder or a liquid.

10. Use of the baking composition according to any of claims 7-9 for preparing dough.

11. The method according to claim 1, wherein the dough is less sticky compared to dough wherein a GH5 xylanase has not been added.

12. The method according to claim 1, wherein the GH5 xylanase is a GH5_21 or a GH5_34 xylanase.

## Patentansprüche

1. Verfahren zur Herstellung eines auf Teig basierenden Produkts, umfassend die Zugabe einer GH5-Xylanase und einer GH11-Xylanase zu einem Teig.

2. Verfahren nach Anspruch 1, wobei die GH5-Xylanase mindestens 70% Identität zu SEQ ID NO: 1 aufweist.

3. Verfahren nach einem der vorhergehenden Ansprüche, wobei das auf Teig basierende Produkt ein Brot ist.

4. Verfahren nach einem der vorhergehenden Ansprüche, wobei der Teig Weizen und/oder Mais umfasst.

5. Verfahren nach einem der vorhergehenden Ansprüche, wobei zusätzlich ein oder mehrere Enzyme ausgewählt aus der Gruppe bestehend aus einer Amylase, einer Anti-Staling-Amylase, einer Lipase, einer Galactolipase, einer Phospholipase, einer Protease, einer Transglutaminase, einer Cellulase, einer Hemicellulase, einer Acyltransferase, einer Proteindisulfid-Isomerase, einer Pektinase, einer Pektat-Lyase, einer Oxidoreduktase, einer Peroxidase, einer Laccase, einer Glucoseoxidase, einer Pyranoseoxidase, einer Hexoseoxidase, einer Lipoxygenase, einer L-Aminosäure-Oxidase, einer Kohlenhydratoxidase, einer Schwefelhydryloxidase und einer Glucoamylase zu dem Teig zugesetzt werden.

6. Teig, hergestellt durch Zusetzen einer GH5-Xylanase und einer GH11-Xylanase zu Teigbestandteilen.

7. Backzusammensetzung, umfassend eine GH5-Xylanase und eine GH11-Xylanase.

8. Backzusammensetzung nach Anspruch 7, die ein Teig, eine Mehlzusammensetzung oder eine Mehlvormischung ist.

9. Backzusammensetzung nach einem der Ansprüche 7-8, welche in Form eines Granulats oder eines agglomerierten Pulvers oder einer Flüssigkeit vorliegt.

**10.** Verwendung der Backzusammensetzung nach einem der Ansprüche 7-9 zur Herstellung von Teig.

**11.** Verfahren nach Anspruch 1, wobei der Teig weniger klebrig ist, verglichen mit Teig, bei dem keine GH5-Xylanase zugesetzt wurde.

**12.** Verfahren nach Anspruch 1, wobei die GH5-Xylanase eine GH5_21- oder eine GH5_34-Xylanase ist.

**Revendications**

**1.** Méthode de préparation d'un produit à base de pâte, comprenant l'addition d'une xylanase GH5 et d'une xylanase GH11 à une pâte.

**2.** Méthode selon la revendication 1, dans laquelle la xylanase GH5 possède au moins 70% d'identité par rapport à SEQ ID n° 1.

**3.** Méthode selon l'une quelconque des revendications précédentes, dans laquelle le produit à base de pâte est un pain.

**4.** Méthode selon l'une quelconque des revendications précédentes, dans laquelle la pâte comprend du blé et/ou du maïs.

**5.** Méthode selon l'une quelconque des revendications précédentes, dans laquelle, de plus, une ou plusieurs enzymes choisies dans le groupe constitué par une amylase, une amylase anti-rassissement, une lipase, une galactolipase, une phospholipase, une protéase, une transglutaminase, une cellulase, une hémicellulase, une acyltransférase, une protéine disulfure isomérase, une pectinase, une pectate lyase, une oxydoréductase, une peroxydase, une laccase, une glucose oxydase, une pyranose oxydase, une hexose oxydase, une lipoxygénase, une acide L-aminé oxydase, une glucide oxydase, une sulfhydryl oxydase, et une glucoamylase, sont ajoutées à la pâte.

**6.** Pâte préparée par l'addition d'une xylanase GH5 et d'une xylanase GH11 à des ingrédients de pâte.

**7.** Composition de panification comprenant une xylanase GH5 et une xylanase GH11.

**8.** Composition de panification selon la revendication 7, qui est une pâte, une composition de farine, ou un prémélange de farine.

**9.** Composition de panification selon l'une quelconque des revendications 7-8, qui se trouve sous la forme de granulés ou d'une poudre agglomérée ou d'un liquide.

**10.** Utilisation de la composition de panification selon l'une quelconque des revendications 7-9, pour la préparation d'une pâte.

**11.** Méthode selon la revendication 1, dans laquelle la pâte est moins collante par rapport à une pâte dans laquelle une xylanase GH5 n'a pas été ajoutée.

**12.** Méthode selon la revendication 1, dans laquelle la xylanase GH5 est une xylanase GH5_21 ou GH5_34.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011070101 A1
- WO 9523515 A1
- GB 2392160 A
- WO 2004023879 A1
- WO 9632472 A1
- WO 9517413 A
- WO 9522625 A
- US 5223409 A
- WO 9206204 A
- WO 9943835 A
- WO 9600787 A
- WO 0056900 A
- WO 9425612 A
- WO 9533836 A
- WO 0024883 A
- EP 238023 A
- WO 8402921 A
- WO 9826057 A
- WO 0032758 A


### Non-patent literature cited in the description


- **POPPER ; TUOHY.** *Plant Physiology,* 2010, vol. 153, 373-383
- **COLLINS ; GERDAY ; FELLER.** *FEMS MICROBIOLOGY REVIEWS,* 21 July 2004, vol. 29
- **ASPEBORG et al.** *BMC Evolutionary Biology,* 2012, vol. 12, 186
- **NEEDLEMAN ; WUNSCH.** *J. Mol. Biol.,* 1970, vol. 48, 443-453
- **RICE et al.** EMBOSS: The European Molecular Biology Open Software Suite. *Trends Genet.,* 2000, vol. 16, 276-277
- **RICE et al.** *EMBOSS: The European Molecular Biology Open Software Suite,* 2000
- **SAMBROOK et al.** Molecular Cloning, A Laboratory Manual. Cold Spring Harbor, 1989
- **H. NEURATH ; R.L. HILL.** The Proteins. Academic Press, 1979
- **CUNNINGHAM ; WELLS.** *Science,* 1989, vol. 244, 1081-1085
- **HILTON et al.** *J. Biol. Chem.,* 1996, vol. 271, 4699-4708
- **DE VOS et al.** *Science,* 1992, vol. 255, 306-312
- **SMITH et al.** *J. Mol. Biol.,* 1992, vol. 224, 899-904
- **WLODAVER et al.** *FEBS Lett.,* 1992, vol. 309, 59-64
- **REIDHAAR-OLSO ; SAUER.** *Science,* 1988, vol. 241, 53-57
- **BOWIE ; SAUER.** *Proc. Natl. Acad. Sci. USA,* 1989, vol. 86, 2152-2156
- **LOWMAN et al.** *Biochemistry,* 1991, vol. 30, 10832-10837
- **DERBYSHIRE et al.** *Gene,* 1986, vol. 46, 145
- **NER et al.** *DNA,* 1988, vol. 7, 127
- **NESS et al.** *Nature Biotechnology,* 1999, vol. 17, 893-896
- **COOPER et al.** *EMBO J.,* 1993, vol. 12, 2575-2583
- **DAWSON et al.** *Science,* 1994, vol. 266, 776-779
- **MARTIN et al.** *J. Ind. Microbiol. Biotechnol.,* 2003, vol. 3, 568-576
- **SVETINA et al.** *J. Biotechnol.,* 2000, vol. 76, 245-251
- **RASMUSSEN-WILSON et al.** *Appl. Environ. Microbiol.,* 1997, vol. 63, 3488-3493
- **WARD et al.** *Biotechnology,* 1995, vol. 13, 498-503
- **CONTRERAS et al.** *Biotechnology,* 1991, vol. 9, 378-381
- **EATON et al.** *Biochemistry,* 1986, vol. 25, 505-512
- **COLLINS-RACIE et al.** *Biotechnology,* 1995, vol. 13, 982-987
- **CARTER et al.** *Proteins: Structure, Function, and Genetics,* 1989, vol. 6, 240-248
- **STEVENS.** *Drug Discovery World,* 2003, vol. 4, 35-48
- **INNIS et al.** PCR: A Guide to Methods and Application. Academic Press, 1990
- **FORD et al.** *Protein Expression and Purification,* 1991, vol. 2, 95-107
- **AGAISSE ; LERECLUS.** *Molecular Microbiology,* 1994, vol. 13, 97-107
- **EGON et al.** *Gene,* 1988, vol. 69, 301-315
- **VILLA-KAMAROFF et al.** *Proc. Natl. Acad. Sci. USA,* 1978, vol. 75, 3727-3731
- **DEBOER et al.** *Proc. Natl. Acad. Sci. USA,* 1983, vol. 80, 21-25

- **GILBERT et al.** Useful proteins from recombinant bacteria. *Scientific American,* 1980, vol. 242, 74-94
- **ROMANOS et al.** *Yeast,* 1992, vol. 8, 423-488
- **HUE et al.** *Journal of Bacteriology,* 1995, vol. 177, 3465-3471
- **GUO ; SHERMAN.** *Mol. Cellular Biol.,* 1995, vol. 15, 5983-5990
- **SIMONEN ; PALVA.** *Microbiological Reviews,* 1993, vol. 57, 109-137
- **GEMS et al.** *Gene,* 1991, vol. 98, 61-67
- **CULLEN et al.** *Nucleic Acids Res.,* 1987, vol. 15, 9163-9175
- **CHANG ; COHEN.** *Mol. Gen. Genet.,* 1979, vol. 168, 111-115
- **YOUNG ; SPIZIZEN.** *J. Bacteriol.,* 1961, vol. 81, 823-829
- **DAVIDOFF-ABELSON.** *J. Mol. Biol.,* 1971, vol. 56, 209-221
- **SHIGEKAWA ; DOWER.** *Biotechniques,* 1988, vol. 6, 742-751
- **KOEHLER ; THORNE.** *J. Bacteriol.,* 1987, vol. 169, 5271-5278
- **HANAHAN.** *J. Mol. Biol.,* 1983, vol. 166, 557-580
- **DOWER et al.** *Nucleic Acids Res.,* 1988, vol. 16, 6127-6145
- **GONG et al.** *Folia Microbiol. (Praha),* 2004, vol. 49, 399-405
- **MAZODIER et al.** *J. Bacteriol.,* 1989, vol. 171, 3583-3585
- **BURKE et al.** *Proc. Natl. Acad. Sci. USA,* 2001, vol. 98, 6289-6294
- **CHOI et al.** *J. Microbiol. Methods,* 2006, vol. 64, 391-397
- **PINEDO ; SMETS.** *Appl. Environ. Microbiol.,* 2005, vol. 71, 51-57
- **PERRY ; KURAMITSU.** *Infect. Immun.,* 1981, vol. 32, 1295-1297
- **CATT ; JOLLICK.** *Microbios,* 1991, vol. 68, 189-207
- **BUCKLEY et al.** *Appl. Environ. Microbiol.,* 1999, vol. 65, 3800-3804
- **CLEWELL.** *Microbiol. Rev.,* 1981, vol. 45, 409-436
- **HAWKSWORTH et al.** Ainsworth and Bisby's Dictionary of The Fungi. CAB International, University Press, 1995
- Biology and Activities of Yeast. Soc. App. Bacteriol. Symposium Series, 1980
- **YELTON et al.** *Proc. Natl. Acad. Sci. USA,* 1984, vol. 81, 1470-1474
- **CHRISTENSEN et al.** *Bio/Technology,* 1988, vol. 6, 1419-1422
- **MALARDIER et al.** *Gene,* 1989, vol. 78, 147-156
- Guide to Yeast Genetics and Molecular Biology. **BECKER ; GUARENTE.** Methods in Enzymology. Academic Press, Inc, vol. 194, 182-187
- **ITO et al.** *J. Bacteriol.,* 1983, vol. 153, 163
- **HINNEN et al.** *Proc. Natl. Acad. Sci. USA,* 1978, vol. 75, 1920
- Protein Purification. VCH Publishers, 1989
- **BOEL et al.** *EMBO J.,* 1984, vol. 3 (5), 1097-1102
- *Agric. Biol. Chem.,* 1991, vol. 55 (4), 941-949
- **DIDERICHSEN et al.** *Plasmid,* 1993, vol. 30, 312-315

SEQUENCE LISTING

<110> Novozymes A/S

<120> GH5 XYLANASE FOR DOUGH DRYNESS

<130> 12984-WO-PCT

<160> 2

<170> PatentIn version 3.5

<210> 1
<211> 598
<212> PRT
<213> Elephant dung metagenome

<220>
<221> mat_peptide
<222> (1)..(598)

<400> 1

```
Trp Arg Gly Met Arg Met Pro Glu Leu Phe Ile Lys Gly Arg Tyr Leu
1               5                   10                  15

Met Ala Lys Asp Met Asn Gly Asn Asp Ser Ile Val Asn Leu His Gly
            20                  25                  30

Phe Gly Gln Thr Tyr Ser Ala Tyr Phe Asn Gly Tyr Ala Trp Cys Lys
        35                  40                  45

Asn Pro Asp Gly Ser Val Asn Trp Gly Lys Thr Lys Asp Ala Ala Ala
    50                  55                  60

Cys Val Lys Trp Asn Lys Glu Gln Ile Gly Leu Met Leu Asp His Gly
65                  70                  75                  80

Trp Lys Val Asn Trp Leu Arg Leu His Met Asp Pro Ala Trp Ser Asn
                85                  90                  95

Asn Glu Thr Lys Val Asn Gln Trp Gln Ser Gln His Pro Gly Thr Tyr
            100                 105                 110

Tyr Ser Glu Asn Leu Ile Val Ala Phe Asp Met Asn Leu Phe Lys Lys
        115                 120                 125

Tyr Leu Asp Glu Ile Phe Ile Pro Met Ala Glu Tyr Ala Ile Glu Asn
    130                 135                 140

Gly Ile Tyr Val Val Met Arg Pro Pro Gly Val Cys Pro Gln Lys Leu
145                 150                 155                 160
```

```
Thr Val Gly Asp Glu Tyr Gln Gln Tyr Leu Ile Lys Val Trp Thr Tyr
                165                 170                 175

Val Cys Ser His Glu Lys Leu Lys Asn Asn Pro Tyr Ile Met Phe Glu
            180                 185                 190

Leu Ala Asn Glu Pro Ile Asp Met Asn Asp Gly Asn Gly Asn Tyr Thr
        195                 200                 205

Ser Trp Ser Asp Gly Ser Gln Lys Asn Cys Thr Lys Phe Phe Gln Lys
    210                 215                 220

Ile Val Asp Glu Ile Arg Ala Val Gly Cys Asn Asn Ile Leu Trp Val
225                 230                 235                 240

Pro Gly Leu Ala Tyr Gln Gln Asn Tyr Gln Gly Tyr Val Lys Tyr Pro
                245                 250                 255

Ile Val Gly Glu Asn Ile Gly Phe Ala Val His Cys Tyr Pro Gly Trp
            260                 265                 270

Tyr Gly Ser Asp Ser Glu Val Ala Ser Ala Glu Gln Gln Ile Val Thr
        275                 280                 285

Asn Gly Asn Thr Tyr Ala Asp Phe Gln Ser Gly Trp Ser Ala Ser Ile
    290                 295                 300

Asp Gly Val Ser Lys Leu Arg Pro Ile Ile Val Thr Glu Met Asp Trp
305                 310                 315                 320

Ala Pro Lys Lys Tyr Asn Ser Ser Trp Gly Lys Ala Thr Thr Gly Lys
                325                 330                 335

Leu Gly Gly Val Gly Phe Gly Asn Asn Phe Lys Tyr Ile Met Asp Lys
            340                 345                 350

Thr Gly Asn Val Ser Trp Met Leu Phe Thr Asp Ala Asp Lys Leu Ala
        355                 360                 365

Lys Tyr Asp Asp Ser Lys Ala Asp Gly Ser Thr Phe Leu Thr Asp Pro
    370                 375                 380

Glu Ala Cys Pro Arg Pro Val Tyr Arg Trp Tyr Lys Glu Tyr Ala Glu
385                 390                 395                 400

Pro Gly Trp Lys Phe Val Glu Thr Leu Ala Asp Glu Phe Tyr Met Phe
                405                 410                 415
```

```
Pro Gly Thr Asn Ser Ile Phe Ser Pro Asn Ile Trp Glu Lys Gly Thr
            420                 425                 430

Leu Thr Lys Asn Asp Asp Gly Ser Arg Thr Leu Val Thr Gly Gln Tyr
        435                 440                 445

Gly Phe Gly Gly Trp Lys Phe Gly Gly Gly Leu Asp Met Ser Gly Tyr
    450                 455                 460

Lys Tyr Leu Val Leu Asn Leu Thr Lys Ala Pro Ala Ser Asn Gln Trp
465                 470                 475                 480

Ser Leu Arg Leu Phe Asp Val Asp Asn Tyr Trp Thr Asp Pro Tyr Met
                485                 490                 495

Lys Asp Val Lys Ser Ser Thr Arg Val Val Val Asp Leu Gln Asn Met
            500                 505                 510

Lys Asn Ser Lys Gly Val Lys Val Asp Pro Ser His Ile Tyr Ile Leu
        515                 520                 525

Gly Leu Trp Ser Thr Gly Gly Thr Pro Ile Thr Ile Lys Asp Ile Tyr
    530                 535                 540

Leu Thr Asn Asn Ser Asp Tyr Ser Pro Glu Ser Thr Gly Ile Ser Glu
545                 550                 555                 560

Thr Leu Ala Glu Lys Arg Leu Asp Thr Pro Ile Tyr Asn Leu Ser Gly
                565                 570                 575

Gln Arg Val Thr Glu Pro Arg Asn Gly His Val Tyr Ile Arg Asn Gly
            580                 585                 590

Lys Lys Phe Ile Tyr Lys
        595
```

<210> 2
<211> 1797
<212> DNA
<213> Artificial sequence

<220>
<223> Synthetic DNA

<400> 2

```
tggcgtggca tgagaatgcc ggaactgttt atcaaaggca gatatctgat ggcgaaagat      60

atgaatggca acgatagcat tgttaatctg catggctttg gccaaacata tagcgcgtat     120
```

```
tttaacggct atgcgtggtg caaaaatccg gatggctcag ttaattgggg caaaacaaaa      180
gatgcagcag catgcgttaa atggaataaa gaacaaattg gcctgatgct ggatcatggc      240
tggaaagtta attggctgag actgcatatg gatccggcat ggtcaaataa tgaaacaaaa      300
gtcaatcaat ggcagagcca acatccggga acatattatt cagaaaatct gatcgtcgcg      360
tttgatatga acctgtttaa aaaatatctg gatgaaatct ttattccgat ggcggaatat      420
gcgattgaaa acggcattta tgttgttatg cgtccgcctg gcgtttgtcc gcaaaaactg      480
acagttggag atgaatatca gcagtacctg attaaagtct ggacatatgt ttgcagccat      540
gaaaaactga aaaacaatcc gtatattatg tttgaactgg cgaacgaacc gatcgatatg      600
aatgatggca atggcaatta tacgtcatgg tcagatggct cacagaaaaa ctgcacgaaa      660
ttttttcaga aaattgtcga cgaaattaga gcagtcggct gcaataacat tctgtgggtt      720
ccgggactgg catatcaaca aaattatcaa ggctatgtca aatacccgat tgtcggcgaa      780
aatattggct ttgcagttca ttgctatccg ggatggtatg gctcagattc agaagttgca      840
tcagcagaac aacaaattgt cacaaacggc aatacgtatg cggattttca atcaggctgg      900
tcagcaagca ttgatggcgt ttcaaaactt agaccgatta tcgtcacaga aatggattgg      960
gcaccgaaaa aatacaattc atcatggggc aaagcaacga caggcaaact gggaggcgtt     1020
ggctttggca ataactttaa atacatcatg gacaaaacag gcaacgttag ctggatgctg     1080
tttacagatg cagataaact ggcgaaatat gatgattcaa aagcagatgg cagcacgttt     1140
ctgacagatc cggaagcatg ccctagaccg gtttatagat ggtataaaga atatgcagaa     1200
ccgggatgga aatttgttga aacactggca gatgaatttt acatgtttcc gggaacaaac     1260
agcattttta gcccgaacat ttgggaaaaa ggcacactga caaaaaatga tgatggctca     1320
agaacactgg tcacaggcca atatggcttt ggaggctgga aatttggcgg aggcctggat     1380
atgtcaggct ataaatacct ggttctgaac ctgacaaaag caccggcatc aaatcaatgg     1440
tcactgagac tgtttgatgt cgataactat tggacagacc cgtatatgaa agatgtcaaa     1500
tcaagcacaa gagtcgttgt cgatctgcag aatatgaaaa atagcaaagg cgttaaagtc     1560
gacccgagcc atatctatat tctgggcctg tggtcaacag gcggaacacc gattacaatt     1620
aaagatatct atctgacaaa taatagcgat tattcaccgg aatcaacagg catttcagaa     1680
acacttgcag aaaaaagact ggacacaccg atttataacc tgtcaggcca aagagttaca     1740
gaaccgagaa atggccatgt ctatattcgc aacggcaaaa aattcattta caaataa        1797
```